(19) Europäisches Patentamt
European Patent Office
Office européen des brevets

(11) **EP 3 003 810 B1**

(12) **EUROPÄISCHE PATENTSCHRIFT**

(45) Veröffentlichungstag und Bekanntmachung des Hinweises auf die Patenterteilung:
**12.07.2017** **Patentblatt 2017/28**

(21) Anmeldenummer: **14724063.4**

(22) Anmeldetag: **12.05.2014**

(51) Int Cl.:
**B60W 30/09** (2012.01) **B62D 15/02** (2006.01)

(86) Internationale Anmeldenummer:
**PCT/EP2014/059618**

(87) Internationale Veröffentlichungsnummer:
**WO 2014/195087 (11.12.2014 Gazette 2014/50)**

(54) **STEUERGERÄT UND VERFAHREN FÜR EINE NOTFALL-LENKUNTERSTÜTZUNGSFUNKTION**

CONTROL DEVICE AND METHOD FOR EMERGENCY STEERING ASSIST FUNCTION

DISPOSITIF DE COMMANDE ET PROCÉDÉ POUR UNE ASSISTANCE D'URGENCE À LA DIRECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.06.2013 DE 102013009252**

(43) Veröffentlichungstag der Anmeldung:
**13.04.2016 Patentblatt 2016/15**

(73) Patentinhaber: **TRW Automotive GmbH**
**73553 Alfdorf (DE)**

(72) Erfinder:
• **HASS, Carsten**
**40547 Duesseldorf (DE)**
• **BERTRAM, Torsten**
**40547 Duesseldorf (DE)**
• **KELLER, Martin**
**44379 Dortmund (DE)**

(74) Vertreter: **Schmidt, Steffen J.**
**Wuesthoff & Wuesthoff**
**Patentanwälte PartG mbB**
**Schweigerstrasse 2**
**81541 München (DE)**

(56) Entgegenhaltungen:
DE-A1-102007 013 303

• LONG HAN ET AL: "Bézier curve based path planning for autonomous vehicle in urban environment", INTELLIGENT VEHICLES SYMPOSIUM (IV), 2010 IEEE, IEEE, PISCATAWAY, NJ, USA, 21. Juni 2010 (2010-06-21), Seiten 1036-1042, XP031732246, ISBN: 978-1-4244-7866-8
• SIMON A ET AL: "Vehicle guidance for an autonomous vehicle", INTELLIGENT TRANSPORTATION SYSTEMS, 1999. PROCEEDINGS. 1999 IEEE/IEEJ/ JSAI INTERNATIONAL CONFERENCE ON TOKYO, JAPAN 5-8 OCT. 1999, PISCATAWAY, NJ, USA,IEEE, US, 5. Oktober 1999 (1999-10-05), Seiten 429-434, XP010369876, DOI: 10.1109/ITSC.1999.821096 ISBN: 978-0-7803-4975-9
• DELSART V ET AL: "Real-time trajectory generation for car-like vehicles navigating dynamic environments", 2009 IEEE INTERNATIONAL CONFERENCE ON ROBOTICS AND AUTOMATION : (ICRA) ; KOBE, JAPAN, 12 - 17 MAY 2009, IEEE, PISCATAWAY, NJ, USA, 12. Mai 2009 (2009-05-12), Seiten 3401-3406, XP031509771, ISBN: 978-1-4244-2788-8

EP 3 003 810 B1

**Beschreibung**

Es werden ein Steuergerät und ein Verfahren für eine Notfall-Lenkunterstützungsfunktion eines Landfahrzeugs beschrieben. Insbesondere werden ein Steuergerät und ein Verfahren zur Berechnung einer Ausweichtrajektorie beschrieben.

Hintergrund und Stand der Technik

Aus dem Stand der Technik sind Systeme bekannt, die in kritischen Fahrsituationen automatisch die Bremsen eines Fahrzeugs aktivieren, um eine Kollision mit einem Hindernis zu vermeiden oder um zumindest die Kollisionsgeschwindigkeit zu reduzieren. Da die Länge des Bremswegs mit zunehmender Geschwindigkeit überproportional steigt, weisen Not-Bremssysteme den Nachteil auf, dass diese zum Beispiel bei einer großen Differenzgeschwindigkeit zwischen Fahrzeug und Hindernis eine Kollision nicht immer verhindern können, sondern nur die Schwere der Kollision reduzieren können.

Da durch einen Ausweichvorgang Kollisionen auch bei höheren Geschwindigkeiten effektiv vermieden werden können, kann in bestimmten Fahrsituationen ein Not-Ausweichen effektiver und sicherer als ein automatisches Not-Bremsen sein. Durch das Not-Ausweichen kann das Fahrzeug allerdings in den fahrdynamischen Grenzbereich gebracht werden. Ungeübte Fahrer sind in den jeweiligen Gefahrensituationen jedoch häufig überfordert und häufig auch nicht in der Lage, den Not-Ausweichvorgang in geeigneter Weise erfolgreich durchzuführen. Vielmehr besteht die Gefahr, dass der Fahrer eine falsche Lenkbewegung macht und dann die Kontrolle über das Fahrzeug verliert. Daher sollte der Fahrer bei einem Not-Ausweichvorgang unterstützt werden.

Diesbezüglich wird in Dokument DE 10 2004 008 894 A1 ein Unfallvermeidungssystem für Kraftfahrzeuge vorgeschlagen. Das System umfasst eine Auswertungseinheit die mindestens eine Ausweichtrajektorie und/oder mindestens einen automatischen-Not-Bremsvorgang ermittelt. Nach dem Einleiten des Fahrmanövers, wird dem Fahrer durch ein geeignetes Lenksystem eine Ausweichtrajektorie in Form eines aufgebrachten Lenkmoments vermittelt. Dabei kann der Fahrer der vorgeschlagenen Ausweichtrajektorie folgen oder das aufgebrachte Lenkmoment übersteuern.

Aus dem Dokument DE 10 2008 013 988 A1 sind ein Verfahren und eine Vorrichtung zum Durchführen eines Ausweichmanövers bekannt. Die Ausweichbahn wird dabei als eine so genannte Sigmoidfunktion berechnet. Um beim Ausweichen die Stabilität des Fahrzeugs zu erhöhen, ist vorgesehen, dass ein Lenksystem eine Vorderrad-Lenkfunktion und eine Hinterrad-Lenkfunktion derart miteinander verknüpft, dass die Vorderräder und die Hinterräder des Fahrzeugs gleichsinnig gesteuert werden.

Aus dem Dokument EP 1 926 654 B1 ist ein Verfahren und eine Vorrichtung zum Lenken eines Kraftfahrzeugs bekannt. Dabei wird eine Ausweichbahn berechnet und ein Reglerausgangssignal nach Maßgabe einer Abweichung zwischen einer IstPosition und der durch die Ausweichbahn vorgegebene Soll-Position in wenigstens zwei parallel angeordneten linearen Reglermodulen ermittelt. Als besonders vorteilhaft hat sich dabei eine Bahnvorgabe in Form eine Sigmoide herausgestellt. Die Ausgangssignale der parallel angeordneten linearen Regler werden in Abhängigkeit der Fahrzeuggeschwindigkeit gewichtet und anhand der gewichteten Reglerausgangssignale wird ein Lenkwinkel ermittelt.

Aus dem Dokument WO 2008/031662 A1 ist ein Verfahren zur Vermeidung oder zumindest der Folgenminderung der Kollision eines Fahrzeugs mit mindestens einem Objekt bekannt. Mittels der Sensorik des Fahrzeugs wird der aktuelle Fahrzeugzustand sowie Objekte im Sensorerfassungsbereich erkannt. Unter Berücksichtigung des aktuellen Fahrzeugzustands wird aus der Gesamtheit aller möglichen Bewegungen des Fahrzeugs mittels einer Optimierungsfunktion eine Ausweichtrajektorie bestimmt. Sobald eine Fahrervermeidungsreaktion ermittelt wird, werden Stellsignale zur Korrektur des Fahrzeugzustands derart erzeugt, dass das Fahrzeug in Richtung auf die Ausweichtrajektorie geführt wird.

Aus dem Dokument EP 2 323 890 B1 ist ein Verfahren zur Lenkunterstützung bei Notmanövern bekannt. Eine Trajektorien-Berechnungseinheit berechnet Fahrfächer aller fahrbaren und stabilen Bewegungstrajektorien. Beim Erkennen einer Gefahrensituation wird diejenige Bewegungstrajektorie aus dem aktuell bestimmten Fahrfächer bestimmt, die dem durch die aktuelle Lenkradbetätigung angezeigten Fahrmanöver entspricht. Der aktuelle Lenkwinkel wird als Ist-Wert mit einem aus der bestimmten Ausweichtrajektorie ermittelten Soll-Wert verglichen. Wenn die Regelabweichung einen vorgegebenen Wert überschreitet, wird der aktuelle Lenkwinkel mittels eines Zusatzlenkwinkels kompensiert und/oder dem Fahrer durch ein auf das Lenkrad aufgebrachtes Gegenmoment der erforderliche Lenkwinkel vermittelt.

Aus dem Dokument "Querregelung eines Versuchsfahrzeugs entlang vorgegebener Bahnen" von Steffen Kehl, erschienen im Shaker Verlag, 2007 ist eine Bahnfolgeregelung bekannt, die den Fahrzeugschwerpunkt über die Lenkung des Fahrzeugs entlang einer vergebenen Bahn führt. Mit dieser Bahnfolgeregelung soll die Reproduzierbarkeit von Fahrversuchen sichergestellt werden. Bei der in diesem Dokument beschriebenen Bahnfolgeregelung wird die Lenkmaschine als Stellglied und ein integriertes Navigationssystem für die Messung verwendet. Kupplung, Schaltung, Gas und Bremse werden weiter durch den Versuchsingenieur/Fahrer bedient. Die vom Regler benötigte Soll-Bahnkrümmung wird in Form der Koeffizienten eines stückweise definierten Polynomvektors hinterlegt, wobei der Grad der Polynome so gewählt ist, dass bei der Verfolgung der Soll-Bahn durch das Fahrzeug keine Sprünge in der Lenkwinkelgeschwindigkeit vorkommen.

Aus dem Dokument DE 10 2007 013 303 A1 ist ein Verfahren zur Berechnung einer kollisionsvermeidenden Trajektorie für ein Fahrmanöver eines Fahrzeugs bekannt. Bei dem Verfahren wird die laterale Geschwindigkeit des Fahrzeugs unabhängig von der longitudinalen Geschwindigkeit des Fahrzeugs bei der Berechnung der kollisionsvermeidenden Trajektorie berücksichtigt.

Aus dem Dokument "Bezier curved based path planning for autonomous vehicle in urban environment" von Long Han et al., IEEE, Intelligent Vehicle Symposium (IV), 21. Juni 2010, ISBN: 978-1-4244-7866-8, Seiten 1036 bis 1042, ist ein Bezierkurvenbasiertes Verfahren zur Berechnung einer Trajektorie für autonome Fahrzeug bekannt.

Aus dem Dokument "Vehicle Guidance for an Autonomous Vehicle" von Andreas Simon et al., IEEE, Intelligent Transportation Systems, Proceedings, 5. Oktober 1999, ISBN: 978-0-7803-4975-9, Seiten 429 bis 434, ist ein Verfahren zur Berechnung einer Trajektorie eines autonomen Fahrzeugs auf Basis von Bézier-Splines bekannt.

Aus dem Dokument "Real-Time Trajectory Generation for Car-like Vehicles Navigating Dynamic Environments" von Vivien Delsart et al., IEEE International Conference on Robotics and Automation, 12. Mai 2009, ISBN: 978-1-4244-2788-8, Seiten 3401 bis 3406, sind Verfahren zur effizienten Erzeugung einer Trajektorie zwischen einem Start- und einem Zielpunkt bekannt.

Bei den bekannten Systemen wird die den Soll-Verlauf des Ausweichvorgangs beschreibende Ausweichtrajektorie häufig aus einer Mehrzahl von möglichen Bewegungsbahnen ausgewählt. Diese Bewegungsbahnen können jedoch nur mit großem Rechenaufwand ermittelt werden. Die Ausweichtrajektorien, deren Wegverlauf mittels einer Sigmoidfunktion berechnet wird, sind an den Übergängen von Normalfahrt zum Ausweichvorgang nicht stetig, so dass Sprünge in deren Wegverlauf auftreten, die den Fahrkomfort beeinträchtigen und die Regelung des Ausweichvorgangs erschweren.

Problem

Es besteht somit die Aufgabe, Vorrichtungen und Verfahren bereitzustellen, mit denen der Fahrer des Landfahrzeugs beim Ausweichen unterstützt wird.

Vorgeschlagene Lösung

Zur Lösung der Aufgabe wird ein Steuergerät für ein Landfahrzeug vorgeschlagen. Das Steuergerät ist dazu eingerichtet, anhand einer von dem Steuergerät berechneten Ausweichtrajektorie zumindest einen Aktuator des Landfahrzeugs anzusteuern, um einen Fahrer des Landfahrzeugs bei einem Ausweichvorgang zu unterstützen. Das Steuergerät ist ferner dazu eingerichtet, Sensorsignale zumindest eines Sensors zu empfangen; aus den empfangenen Sensorsignalen ein Umgebungsmodell zu erzeugen; in dem erzeugten Umgebungsmodell die Position eines Objekts relativ zur aktuellen Position des Landfahrzeugs zu ermitteln; und eine vorläufige Ausweichtrajektorie zu berechnen. Beim Berechnen der vorläufigen Ausweichtrajektorie bildet die aktuelle Position des Landfahrzeugs in dem erzeugten Umgebungsmodell den Anfangspunkt der vorläufigen Ausweichtrajektorie. Anhand der ermittelten Position des Objekts wird ein vorläufiger Endpunkt der vorläufigen Ausweichtrajektorie ermittelt. Zum Ermitteln der Parameter der vorläufigen Ausweichtrajektorie werden zumindest die Koordinaten des Anfangspunkts und des vorläufigen Endpunkts verwendet.

Zudem wird zur Lösung der Aufgabe ein Lenkunterstützungssystem für ein Landfahrzeug vorgeschlagen. Das Lenkunterstützungssystem umfasst zumindest eine Kamera und/oder zumindest einen Radarsensor. Zudem umfasst das Lenkunterstützungssystem zumindest einen Lenkunterstützungs-Aktuator und ein Steuergerät. Das Steuergerät ist dazu eingerichtet, anhand einer von dem Steuergerät berechneten Ausweichtrajektorie den zumindest einen Lenkunterstützungs-Aktuator anzusteuern, um einen Fahrer des Landfahrzeugs bei einem Ausweichvorgang zu unterstützen. Das Steuergerät ist ferner dazu eingerichtet, Sensorsignale der zumindest einen Kamera und/oder des zumindest einen Radarsensors zu empfangen; aus den empfangenen Sensorsignalen ein Umgebungsmodell zu erzeugen; in dem erzeugten Umgebungsmodell die Position eines Objekts relativ zur aktuellen Position des Landfahrzeugs zu ermitteln; und eine vorläufige Ausweichtrajektorie zu berechnen. Beim Berechnen der vorläufigen Ausweichtrajektorie bildet die aktuelle Position des Landfahrzeugs in dem erzeugten Umgebungsmodell den Anfangspunkt der vorläufigen Ausweichtrajektorie. Anhand der ermittelten Position des Objekts wird ein vorläufiger Endpunkt der vorläufigen Ausweichtrajektorie ermittelt. Zum Ermitteln der Parameter der vorläufigen Ausweichtrajektorie werden zumindest die Koordinaten des Anfangspunkts und des vorläufigen Endpunkts verwendet.

Ferner wird zur Lösung der Aufgabe ein Verfahren zur Berechnung einer Ausweichtrajektorie für eine Lenkunterstützungsfunktion eines Landfahrzeugs vorgeschlagen. Das Verfahren umfasst das Empfangen von Sensorsignalen zumindest eines Sensors; das Erzeugen eines Umgebungsmodells aus den empfangenen Sensorsignalen; das Ermitteln der Position eines Objekts relativ zur aktuellen Position des eigenen Fahrzeugs in dem erzeugten Umgebungsmodell; und das Berechnen einer vorläufigen Ausweichtrajektorie. Beim Berechnen der vorläufigen Ausweichtrajektorie bildet die aktuelle Position des Landfahrzeugs in dem erzeugten Umgebungsmodell den Anfangspunkt der vorläufigen Ausweichtrajektorie. Anhand der ermittelten Position des Objekts im Umgebungsmodell wird ein vorläufiger Endpunkt der vorläufigen Ausweichtrajektorie ermittelt. Zum Ermitteln der Parameter der vorläufigen Ausweichtrajektorie werden zumindest die Koordinaten des Anfangspunkts und des vorläufigen Endpunkts der vorläufigen Ausweichtrajektorie verwendet.

Mit dem vorgeschlagenen Steuergerät, System und Verfahren kann die zum Beschreiben des Bahnverlaufs des Ausweichvorgangs verwendete Ausweichtrajektorie effektiv berechnet werden, also einfach ermittelt werden. Zudem kann die ermittelte Ausweichtrajektorie durch einfache mathematische Zusammenhänge beschrieben werden. Aus der berechneten Ausweichtrajektorie können für jeden Zeitpunkt des Ausweichvorgangs Soll-Werte für den Querversatz, die Quergeschwindigkeit und die Querbeschleunigung ermittelt werden. Entsprechend ermöglicht die ermittelte Ausweichtrajektorie eine einfache Regelung. Ferner weist die ermittelte Ausweichtrajektorie einen Verlauf auf, der in geringen Quergeschwindigkeiten und Querbeschleunigungen resultiert.

Ausgestaltung und Eigenschaften

Das Steuergerät kann ferner dazu eingerichtet sein, die vorläufige Ausweichtrajektorie durch ein Verändern der Koordinaten des vorläufigen Endpunkts zu strecken, um eine optimierte Ausweichtrajektorie zu ermitteln. Das Strecken der vorläufigen Ausweichtrajektorie kann iterativ erfolgen. Das Strecken der vorläufigen Ausweichtrajektorie kann das Verschieben der x-Koordinate des vorläufigen Endpunkts; das Ermitteln einer gestreckten Ausweichtrajektorie; das Ermitteln ob die gestreckte Ausweichtrajektorie einen Sicherheitsabstand zu dem Objekt einhält; und wenn der Sicherheitsabstand nicht eingehalten wird, das Abbrechen des Streckens umfassen, wobei die letzte gestreckte Ausweichtrajektorie, bei der der Sicherheitsabstand zum Objekt eingehalten wird, als optimierte Ausweichtrajektorie gewählt werden kann.

Aus der vom Steuergerät berechneten vorläufigen Ausweichtrajektorie oder optimierten Ausweichtrajektorie können Soll-Werte zur Regelung des Ausweichvorgangs ermittelt werden. Die Ausweichtrajektorie kann als Soll-Position des Landfahrzeugs während des Ausweichvorgangs verwendet werden. Weitere Soll-Werte können anhand der ersten, zweiten und/oder dritten Ableitung der Ausweichtrajektorie nach dem Weg in x-Richtung ermittelt werden. Der vorläufige Endpunkt der Ausweichtrajektorie kann neben das Objekt gelegt werden. Zum Beispiel kann der vorläufige Endpunkt seitlich neben einer hinteren Kante des Objekts angeordnet werden. Die hintere Kante des Objekts kann das Objekt zu einem freien Verkehrsraum hin begrenzen. Die hintere Kante des Objekts kann eine vertikale Kante des Objekts sein. Die hintere Kante des Objekts kann eine im Umgebungsmodell erkannte hintere Kante des Objekts sein. Die hintere Kante des Objekts kann eine rechte hintere Kante oder eine linke hintere Kante des Objekts sein. Die x-Koordinate des vorläufigen Endpunkts kann anhand der x-Distanz (Distanz in x-Richtung) zwischen dem eigenen Fahrzeug und der hinteren Kante des Objekts ermittelt werden. Die y-Koordinate des vorläufigen Endpunkts kann anhand einer y-Distanz (Distanz in y-Richtung) des Fahrzeugs zur hinteren Kante des Objekts ermittelt werden. Alternativ kann die y-Koordinate aus dem Umgebungsmodell ermittelt werden. Zum Beispiel kann die y-Koordinate so gewählt werden, dass der Schwerpunkt des Fahrzeugs am Endpunkt der Ausweichtrajektorie ungefähr in der Mitte eines im Umgebungsmodell enthaltenen Fahrstreifens liegt oder das Fahrzeug einen Versatz zu einer im Umgebungsmodell enthaltenen seitlichen Begrenzung eines Fahrstreifens aufweist.

Der Wegverlauf der Ausweichtrajektorie kann dem Verlauf eines Polynoms entsprechen. Zum Beispiel kann der Wegverlauf der Ausweichtrajektorie dem Verlauf eines Polynoms 3. bis 8. Grades entsprechen. Der Wegverlauf der Ausweichtrajektorie kann dem Verlauf eines Polynoms 5. oder 6. Grades entsprechen. Zum Ermitteln der Parameter des Polynoms und/oder der Ausweichtrajektorie kann ein Gleichungssystem aufgestellt werden. Das aufgestellte Gleichungssystem kann mindestens sechs Gleichungen umfassen. Das Gleichungssystem kann Ableitungen des Polynoms nach dem Weg umfassen. Zum Lösen des Gleichungssystems können die Werte für die Ableitungen des Polynoms nach dem Weg aus dem Umgebungsmodell ermittelt werden und/oder mit den Fahrzeugsensoren gemessen werden.

Das Steuergerät kann dazu eingerichtet sein, eine neue Ausweichtrajektorie zu berechnen, wenn ein ermittelter Ist-Wert des Querversatzes außerhalb eines Toleranzschlauchs liegt. Das Steuergerät kann dazu eingerichtet sein, eine neue Ausweichtrajektorie zu berechnen, wenn ein ermittelter Ist-Wert für die Quergeschwindigkeit und/oder die Querbeschleunigung außerhalb eines Toleranzbereichs liegt.

Die vorstehend erläuterten Details sind im Zusammenhang dargestellt. Es sei jedoch darauf hingewiesen, dass sie auch unabhängig voneinander sind und auch frei miteinander kombinierbar sind. Die in den Figuren gezeigten Abläufe sind nicht einschränkend sondern illustrativ zu verstehen. Auch können einzelne Teilschritte abweichend von der gezeigten Reihenfolge abgearbeitet werden und auch von den gezeigten abweichen.

Kurzbeschreibung der Zeichnungen

Weitere Ziele, Merkmale, Vorteile und Anwendungsmöglichkeiten ergeben sich aus der nachfolgenden Beschreibung von nicht einschränkend zu verstehenden Ausführungsbeispielen und den zugehörigen Zeichnungen.

Fig. 1 ist eine schematische Darstellung eines ersten Ausführungsbeispiels eines Ausweichunterstützungssystems;

Fig. 2 ist ein schematisches Ablaufdiagramm für einen unterstützten Ausweichvorgang;

Fig. 3a ist eine schematische Darstellung einer Verkehrssituation;

Fig. 3b ist eine schematische Darstellung einer Verkehrssituation, bei der die Ausweichtrajektorie gestreckt wird;

Fig. 4 ist ein schematisches Ablaufdiagramm für ein Ausweichtrajektorien-Streckverfahren;

Fig. 5 ist eine schematische Darstellung eines Regelungskonzepts;

Fig. 6 ist eine schematische Darstellung eines ersten Teils des in Fig. 5 dargestellten Regelungskonzepts; und

Fig. 7 ist eine schematische Darstellung eines zweiten Ausführungsbeispiels eines Ausweichunterstützungssystems.

Detaillierte Beschreibung von Ausführungsbeispielen

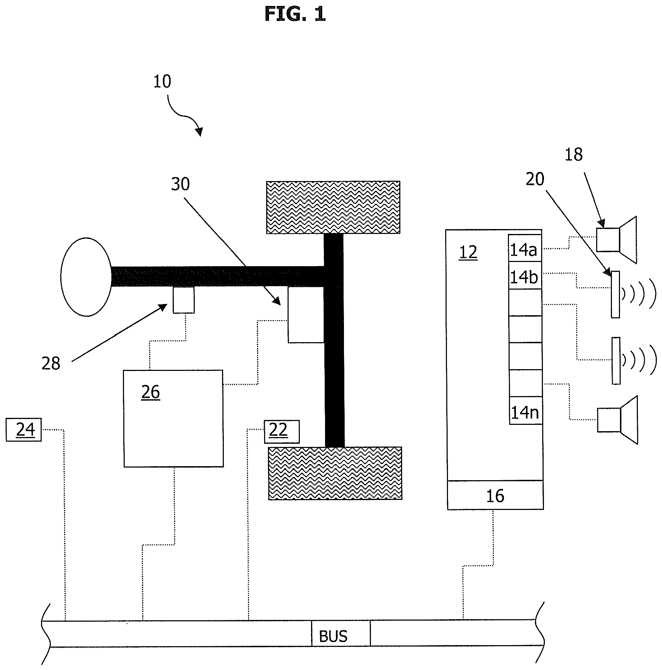

Fig. 1 ist eine schematische Darstellung eines Ausweichunterstützungssystems eines Landfahrzeugs, das den Fahrer des Landfahrzeugs beim Ausweichen unterstützt. Das Ausweichen kann dabei mit reduzierter oder gleichbleibender Geschwindigkeit durchgeführt werden.

Bei dem in Fig. 1 dargestellten Ausführungsbeispiel umfasst das Ausweichunterstützungssystem 10 (ESA-System; ESA := Emergency Steering Assist) ein Steuergerät 12, Sensoren und Aktuatoren. Das Steuergerät 12 kann auch als ESA-Steuergerät 12 bezeichnet werden.

Bei dem in Fig. 1 dargestellten Ausführungsbeispiel weist das ESA-Steuergerät 12 zumindest einen Anschluss 14a, 14b, ..., 14n zum Empfang von Sensorsignalen und zumindest einen Anschluss 16 eines Bussystems wie zum Beispiel CAN, LIN, Flexray etc. auf. Zusätzlich können, in Fig. 1 nicht dargestellte, Anschlüsse zum Ausgeben von Stellsignalen, Steuerbefehlen etc. vorgesehen sein. Das ESA-Steuergerät 12 ist über die Eingänge 14a, 14b, ..., 14n zum Beispiel mit zumindest einer Kamera 18 und/oder zumindest einem Radarsensor 20 verbunden. Dem ESA-Steuergerät 12 werden über den Bus-Anschluss 16 zum Beispiel die Signale von einem Geschwindigkeitssensor 22 und einem Beschleunigungssensor 24 zugeführt. Der Beschleunigungssensor 24 kann die Querbeschleunigung und/oder Längsbeschleunigung und/oder die Gierrate des Fahrzeugs erfassen.

Über den Bus-Anschluss 16 ist das ESA-Steuergerät 12 zudem mit einem Steuergerät 26 einer elektromechanischen Servolenkung (EPS-Steuergerät; EPS := Electrically Powered Steering) verbunden. Das EPS-Steuergerät 26 ist zumindest mit einem Lenkwinkelsensor 28, der auch das vom Fahrer aufgebrachte Lenkmoment erfasst, und einem Lenkunterstützungs-Aktuator 30 verbunden.

Ferner kann das ESA-Steuergerät 12 direkt oder indirekt mit weiteren Sensoren oder Aktuatoren des Fahrzeugs verbunden sein. Mit einer indirekten Verbindung wird dabei eine Verbindung bezeichnet, bei der das ESA-Steuergerät 12 die Signale nicht direkt von einem Sensor empfängt oder an einen Aktuator ausgibt, sondern über ein mit dem Sensor oder dem Aktuator verbundenes Steuergerät, wobei das mit dem Sensor oder Aktuator verbundene Steuergerät die jeweiligen Signale aufbereiten kann. Zum Beispiel könnte das ESA-Steuergerät 12 indirekt auf Sensorsignale eines GPS-Sensors eines Navigationssystems zurückgreifen.

Die dargestellten Sensoren des ESA-Systems 10 können Teil anderer Fahrerassistenzsysteme sein oder zur Implementierung anderer Fahrerassistenzfunktionen verwendet werden. So kann das ESA-Steuergerät 12 zum Beispiel Sensorsignale von Kameras 18 oder Radarsensoren 20 eines adaptiven Geschwindigkeitskontrollsystems (ACC-System), eines Spurführungsassistenten, eines vorausschauenden Kollisionswarnsystems (FCW-System) oder eines automatischen Notfallbremssystems (AEB-System) verwenden. Die jeweiligen Sensorsignale kann das ESA-Steuergerät 12 über die Anschlüsse 14a, 14b, ..., 14n und/oder über den Bus-Anschluss 16 empfangen.

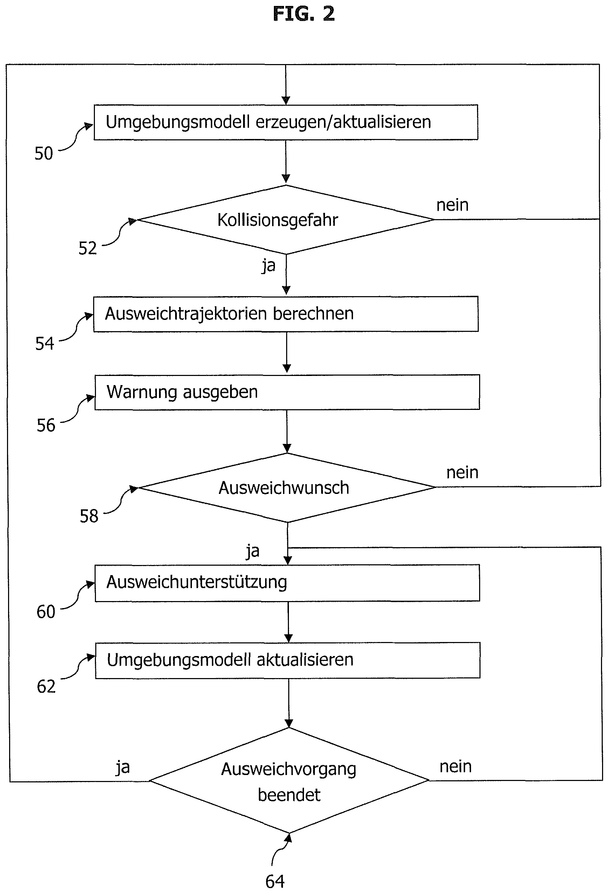

Fig. 2 ist ein schematisches Ablaufdiagram für ein Ausweichmanöver, bei dem der Fahrer durch das ESA-Steuergerät 12 unterstützt wird. Die Reihenfolge der in Fig. 2 dargestellten Blöcke kann verändert werden. Zudem können einige der Blöcke ausgelassen werden. Zum Beispiel können insbesondere die Blöcke 56 und 62 in dem Ablaufdiagramm eher oder später ausgeführt werden. Zudem können einzelne Blöcke nur bei jedem zweiten oder dritten Durchlauf der jeweiligen Schleife ausgeführt werden.

Block 50 stellt den Ausgangszustand dar. Also einen Zustand in dem ein Eingreifen des ESA-Steuergeräts 12 oder ein Ausweichen des Fahrers nicht erforderlich ist. Im Ausgangszustand fusioniert das ESA-Steuergerät 12 die von der zumindest einen Kamera 18 und/oder dem zumindest einen Radarsensor 20 empfangenen Sensorsignale. Aus den fusionierten Sensorsignalen erzeugt das ESA-Steuergerät 12 ein Umgebungsmodell. Neben den Sensorsignalen der Kamera 18 und des Radarsensors 20 kann das Umgebungsmodell auch Informationen weiterer Sensoren, wie zum Beispiel vom Geschwindigkeitssensor 22 ausgegebene Geschwindigkeitsinformationen enthalten. Das Umgebungsmodell bildet zumindest den vor dem eigenen Fahrzeug liegenden Verkehrsraum ab. Das Umgebungsmodell kann zum Beispiel die Position, die Abmessungen, die Geschwindigkeit, die Beschleunigung sowie die Bewegungsrichtung des eigenen Fahrzeugs und die Position, die Abmessungen, die Geschwindigkeit, die Beschleunigung sowie die Bewegungsrichtung von Objekten oder Hindernissen, wie zum Beispiel anderen Fahrzeugen, enthalten. Ferner kann das Umgebungsmodell den Verlauf der Straße vor dem eigenen Fahrzeug enthalten. Die Informationen zu den von der Fahrzeugumfeldsensorik erfassten Objekten/Hindernisse können als Relativ-Werte und/oder als Absolut-Werte in dem Umgebungsmodell enthalten sein.

In Block 52 entscheidet das ESA-Steuergerät 12 ob Kollisionsgefahr besteht. Diese Bedingung kann erfüllt sein, wenn zum Beispiel der Abstand zu einem Objekt einen Mindestabstand unterschreitet und/oder wenn bei gleichbleibenden Geschwindigkeiten und/oder Beschleunigungen des Objekts und des eigenen Fahrzeugs eine Kollision droht. Die Entscheidung hinsichtlich der Kollisionsgefahr kann zum Beispiel anhand der in Dokument WO 2012/062451 A1 beschriebenen Verfahren und Kriterien getroffen werden. Die Offenbarung des Dokuments WO 2012/062451 A1 wird hiermit per Referenz aufgenommen. Besteht keine Kollisionsgefahr kehrt das Verfahren zum Block 50 zurück und aktualisiert das Umgebungsmodell. Besteht Kollisionsgefahr, wird das Verfahren in Block 54 fortgesetzt.

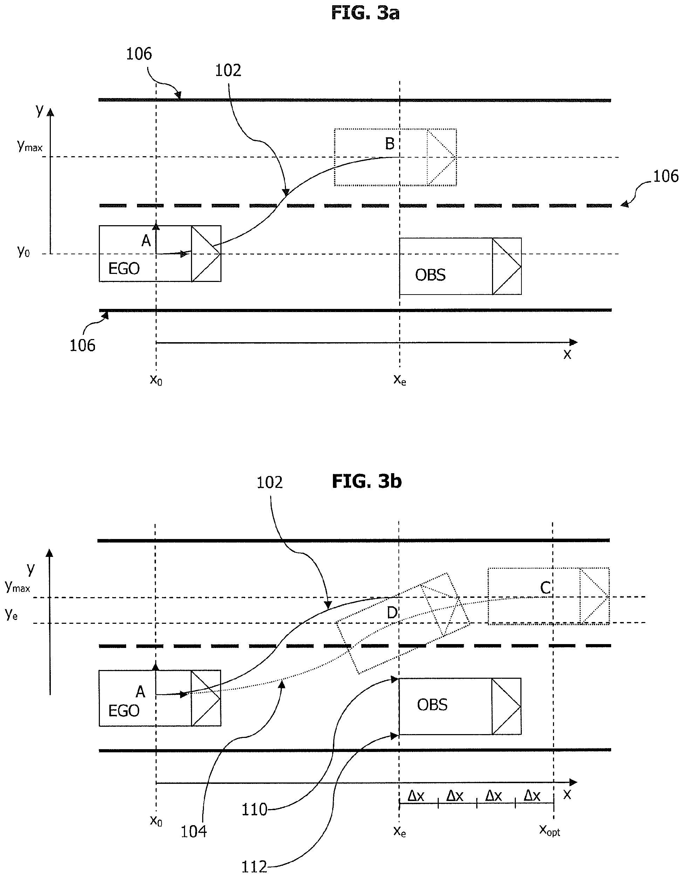

In Block 54 berechnet das ESA-Steuergerät 12 unter Berücksichtigung der räumlichen Gegebenheiten und der aus dem Umgebungsmodell bekannten aktuellen Verkehrssituation zumindest eine Ausweichtrajektorie. Bei Straßen mit lediglich zwei Fahrstreifen, wie zum Beispiel Landstraßen, wird das ESA-Steuergerät 12 in der Regel nur eine Ausweichtrajektorie ermitteln, da nur auf einer Seite des Objekts ausreichend Platz für einen Ausweichvorgang (freier Verkehrsraum) zur Verfügung steht. Bei Straßen mit mehreren Fahrstreifen oder bei genügend freiem Verkehrsraum, wie zum Beispiel bei Autobahnen, wird das ESA-Steuergerät 12 hingegen zumindest eine "linke" und zumindest eine "rechte" Ausweichtrajektorie ermitteln, so dass das Fahrzeug nach rechts oder nach links ausweichen kann. Die Berechnung der Ausweichtrajektorie wird in Verbindung mit den Figuren 3 bis 5 detailliert erläutert.

In Block 56 kann ein Warnsignal an den Fahrer ausgegeben werden. Zum Beispiel kann ein akustisches, ein optisches oder ein haptisches Warnsignal ausgegeben werden. Zudem kann ein Warnsignal für andere Verkehrsteilnehmer ausgegeben werden, zum Beispiel durch das Aktivieren einer Warnblickanlage oder eines Fahrtrichtungsanzeigers des Fahrzeugs. Zudem kann dem Fahrer eine Vorzugsrichtung für den Ausweichvorgang angezeigt werden.

In Block 58 erkennt das ESA-Steuergerät 12 einen Ausweichwunsch des Fahrers. Zum Beispiel kann eine vom Lenkwinkelsensor 28 erfasste Veränderung des Lenkwinkels von dem ESA-Steuergerät 12 als Ausweichwunsch des Fahrers interpretiert werden. Um den Ausweichwunsch des Fahrers zu erkennen, wird der Lenkwinkel und/oder die Änderung des Lenkwinkels und/oder das Lenkmoment mit Schwellenwerten verglichen. Diese Schwellenwerte können zum Beispiel abhängig von der Geschwindigkeit des eigenen Fahrzeugs sein. Zudem kann der Fahrer durch die Richtung der Lenkbewegung bestimmen, ob er nach links oder nach rechts ausweichen will. Somit kann in Block 58 eine von zwei ermittelten Ausweichtrajektorien ausgewählt werden.

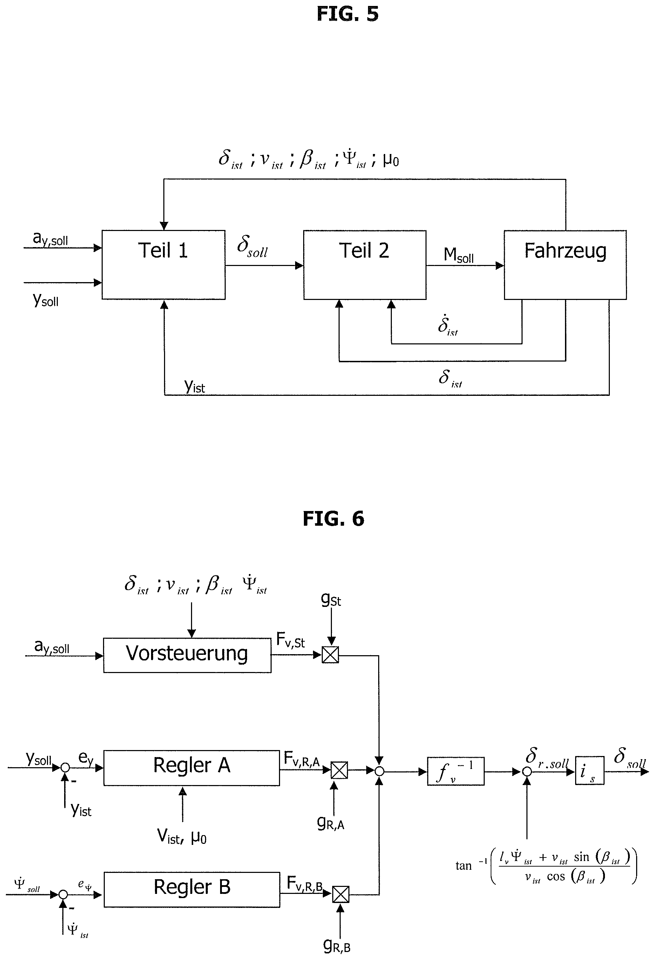

In Block 60 unterstützt das ESA-Steuergerät 12 den Fahrer beim Durchführen des Ausweichvorgangs. Zum Beispiel durch das Aufbringen eines geeigneten Überlagerungsmoments. Zum Ermitteln des aufzubringenden Überlagerungsmoments vergleicht das ESA-Steuergerät 12 in dem Umgebungsmodell die aktuelle Position des Fahrzeugs mit einer durch die Ausweichtrajektorie vorgegebenen Soll-Position. Zum Ermitteln des aufzubringenden Überlagerungsmoments können weitere Parameter aus dem Umgebungsmodell berücksichtigt werden, wie zum Beispiel die Quergeschwindigkeit, die Querbeschleunigung und/oder der Lenkwinkel. Die Unterstützung des Fahrers wird in Verbindung mit den Figuren 5 und 6 detailliert erläutert.

Um eine etwaige Abweichung auszugleichen, kann das ESA-Steuergerät 12 über das EPS-Steuergerät 26 Stellsignale an den Lenkunterstützungs-Aktuator 30 ausgeben. Der Lenkunterstützungs-Aktuator 30 erzeugt dann den Stellsignalen entsprechende Kräfte oder Momente. Zum Beispiel kann der Lenkunterstützungs-Aktuator 30 ein Überlagerungsmoment erzeugen, dass der Fahrer als Ziehen des Lenkrads in Richtung eines Soll-Lenkradwinkels wahrnimmt. Das vom Lenkunterstützungs-Aktuator überlagerte Moment kann dabei so gewählt werden, dass es für den Fahrer deutlich wahrnehmbar ist, jedoch ohne größere Anstrengung übersteuert werden kann. Wenn der Fahrer nicht gegensteuert, also kein Gegenmoment aufbringt, dann nähert sich der vom Fahrer vorgegebene Ist-Lenkradwinkel dem Soll-Lenkradwinkel an.

In Block 62 wird das Umgebungsmodell aktualisiert. Die Position des Blocks 62 kann innerhalb des Ablaufdiagramms variieren. Beispielsweise kann das Umgebungsmodell auch vor dem Block 60 oder nach dem Block 62 aktualisiert werden.

In Block 64 erkennt das ESA-Steuergerät 12, dass der Ausweichvorgang abgeschlossen ist und das Verfahren wird in Block 50 fortgesetzt. Bedingungen für den Abschluss des Ausweichvorgangs können zum Beispiel das Erreichen eines Ziel-Versatzes, einer Ziel-Quergeschwindigkeit, einer Ziel-Querbeschleunigung und/oder einer Ziel-Position sein. Sind die Bedingungen für den Abschluss des Ausweichvorgangs nicht erfüllt, springt das Verfahren zurück zum Block 60. Wird erkannt, dass der Ausweichvorgang abgeschlossen ist, wird das Verfahren mit Block 50 fortgesetzt.

Sollte das Fahrzeug aufgrund von Störgrößen oder anderen Einflüssen, zum Beispiel wenn der Fahrer die durch das ESA-System 10 bereitgestellte Lenkunterstützung übersteuert, nicht auf der ermittelten Ausweichtrajektorie geführt werden können, kann dies zum Beispiel dadurch erkannt werden, dass der Schwerpunkt des eigenen Fahrzeugs einen Toleranzschlauch um die Ausweichtrajektorie verlässt. Zudem können Toleranzbereiche zum Beispiel für die Quergeschwindigkeit, die Querbeschleunigung und/oder den vom Fahrer eingestellten Lenkradwinkel vorgesehen sein. Sobald ein Verlassen des Toleranzschlauchs oder des Toleranzbereichs vom ESA-Steuergerät 12 erkannt wird, kann für die aktuelle Verkehrssituation eine neue Ausweichtrajektorie berechnet werden. Also das Verfahren in Block 54 fortgesetzt werden, wobei der Fahrer in Block 56 darauf hingewiesen werden kann, dass eine neue Ausweichtrajektorie berechnet wurde. Die Größe des Toleranzschlauchs für die Ausweichtrajektorie oder des Toleranzbereichs für die Quergeschwindigkeit, die Querbeschleunigung und den Lenkradwinkel können in Abhängigkeit der fahrdynamischen Eigenschaften des Fahrzeugs vorgeben werden. Die fahrdynamischen Eigenschaften des Fahrzeugs und die entsprechenden Werte für den Toleranzschlauch sowie die Werte für die Toleranzbereiche können zum Beispiel durch Fahrversuche ermittelt werden.

Falls in Block 58 kein Ausweichwunsch des Fahrers erfasst wird oder das Verfahren abgebrochen wird, weil zum Beispiel in Block 54 keine sinnvolle Ausweichtrajektorie berechnet werden konnte, kann ein automatischer Not-Bremsvorgang ausgelöst werden.

Die Fig. 3a und 3b sind schematische Darstellungen einer Verkehrssituation, bei der das eigene Fahrzeug EGO ausweicht, um eine Kollision mit dem Objekt OBS, zum Beispiel einem mit geringerer Geschwindigkeit vorausfahrendem Fahrzeug, zu vermeiden. Es ist eine Straße mit zwei Fahrstreifen dargestellt, wobei sich in der Ausgangsposition das eigene Fahrzeug EGO und das Objekt OBS auf dem rechten Fahrstreifen befinden und das eigene Fahrzeug durch den Ausweichvorgang auf den linken Fahrstreifen wechselt.

Wie bereits in Verbindung mit den Blöcken 50 und 52 der Fig. 2 erläutert wurde, erzeugt das ESA-Steuergerät 12 ein Umgebungsmodell und entscheidet anhand des Umgebungsmodells, ob eine Kollision mit dem Objekt OBS droht oder nicht.

Wie durch das in Fig. 3a dargestellte Koordinatensystem angedeutet, kann der Schwerpunkt des eigenen Fahrzeugs EGO zumindest bis zum Beginn des Ausweichvorgangs als Ursprung eines Umgebungsmodell-Koordinatensystems gewählt werden. Während des Ausweichvorgangs kann für das Umgebungsmodell ein ortsfestes Koordinatensystem verwendet werden. Zum Beispiel kann, wenn in Block 58 der Ausweichwunsch des Fahrers erkannt wird, das ESA-Steuergerät 12 das aktuelle Koordinatensystem in ein ortsfestes Koordinatensystem umgewandelt werden. Während also vor dem Ausweichvorgang das eigene Fahrzeug "steht" und sich der Straßenverlauf "bewegt", "bewegt" sich in dem Umgebungsmodell während des Ausweichvorganges das eigene Fahrzeug und der Straßenverlauf ist ortsfest.

Aus den Sensorsignalen kann das ESA-Steuergerät 12 die Position und den Verlauf von Fahrbahnmarkierungen 106 und/oder Fahrbahnbegrenzungen ermitteln. Aus diesen ermittelten Daten kann das ESA-Steuergerät 12 den Verlauf der in Fahrtrichtung vor dem Fahrzeug liegenden Straße ermitteln. Insbesondere anhand der Radarsignale kann das ESA-Steuergerät 12 die Position von sich in Fahrtrichtung vor dem eigenen Fahrzeug EGO befindenden Objekten OBS ermitteln. Neben der Position von Objekten OBS kann das ESA-Steuergerät 12 zumindest auch die Breite der Objekte ermitteln. Anhand von Veränderungen der Position des Objekts OBS in dem Umgebungsmodell relativ zum eigenen Fahrzeug EGO kann das ESA-Steuergerät 12 die Relativgeschwindigkeit des Objekts OBS ermitteln. Durch Addition der Relativgeschwindigkeit des Objekts OBS mit der durch den Geschwindigkeitssensor 22 erfassten Geschwindigkeit des eigenen Fahrzeugs kann das ESA-Steuergerät 12 die absolute Geschwindigkeit des Objekts OBS ermitteln. In ähnlicher Weise können die Beschleunigung und die Bewegungsrichtung des Objekts OBS ermittelt werden.

Das Umgebungsmodell und die fusionierten Sensorsignale können neben den Sensorsignalen der Kamera 18, des Radarsensors 20 und des Geschwindigkeitssensors 22 zusätzliche Daten von weiteren Sensoren des Fahrzeugs enthalten. Beispielsweise können die fusionierten Sensorsignale oder das Umgebungsmodell auch Informationen oder Daten zur Quer- und Längsbeschleunigung, der Gierrate oder des Lenkwinkels enthalten.

In Fig. 3a ist mit der durchgezogenen Line eine vorläufige Ausweichtrajektorie 102 eingezeichnet. Der Anfangspunkt A der vorläufigen Ausweichtrajektorie 102 ist der Schwerpunkt des eigenen Fahrzeugs EGO zu dem Zeitpunkt an dem das ESA-Steuergerät 12 den Ausweichwunsch des Fahrers erkennt. Wenn mit Beginn des Ausweichvorgangs das Umgebungsmodell-Koordinatensystem in ein ortsfestes Koordinatensystem umgewandelt wird, befindet sich der Schwerpunkt des eigenen Fahrzeugs EGO am Beginn des Ausweichvorgangs im Ursprung des Umgebungsmodell-Koordinatensystems. Somit weisen die Koordinaten $x_0$ und $y_0$ für den Anfangspunkt A jeweils den Wert Null auf.

Das Ermitteln der Koordinate $x_e$ für den Endpunkt B der vorläufigen Ausweichtrajektorie 102 kann dabei auf der Annahme beruhen, dass bei gleichbleibenden Geschwindigkeiten, Beschleunigungen und Bewegungsrichtungen der Ausweichvorgang, also das seitliche Versetzen des eigenen Fahrzeugs EGO, spätestens nach dem Zurücklegen der Strecke bis zu einem erwarteten Kollisionspunkt abgeschlossen sein soll. Die Koordinate $x_e$ kann somit anhand des erwarteten Kollisionspunkts mit dem Objekt OBS ermittelt werden. Den erwarteten Kollisionspunkt kann die ESA-Steuereinheit 12 zum Beispiel anhand der aktuellen Geschwindigkeit, Beschleunigung und/oder Bewegungsrichtung des eigenen Fahrzeugs EGO und des Objekts OBS ermitteln.

Die Koordinate $y_{max}$ des Endpunkts B der vorläufigen Ausweichtrajektorie 102 ergibt sich bei dem in Fig. 3a dargestellten Ausführungsbeispiel durch die Umgebung. Zum Beispiel kann die Koordinate $y_{max}$ so bestimmt werden, dass sich der Schwerpunkt des eigenen Fahrzeugs am Ende des Ausweichvorgangs, also am Endpunkt B der Ausweichtrajektorie, ungefähr in der Mitte des linken Fahrstreifens befindet. Alternativ kann die Koordinate $y_{max}$ beispielsweise auch anhand eines Abstands des Fahrzeugschwerpunkts des eigenen Fahrzeugs zum Objekt OBS gewählt werden.

Sofern es die Situation zulässt, kann das eigene Fahrzeug EGO auch nach rechts ausweichen. Mit den vorstehend erläuterten Annahmen können entsprechende Anfangs- und End-Koordinaten für eine "rechte" Ausweichtrajektorie ermittelt werden. Die "rechte" und/oder "linke" Ausweichtrajektorie können nur dann berechnet werden, wenn das ESA-Steuergerät 12 einen freien Verkehrsraum rechts oder links vom Objekt ermittelt. Zum Beispiel kann das ESA-Steuergerät 12 nur dann eine rechte oder linke Ausweichtrajektorie ermitteln, wenn das Umgebungsmodell einen entsprechenden Fahrstreifen aufweist.

Der Wegverlauf der vorläufigen Ausweichtrajektorie 102 zwischen den Punkten A und B kann durch ein Polynom ermittelt werden. Zum Beispiel kann der Wegverlauf der vorläufigen Ausweichtrajektorie einem Polynom 3. - 8. Grades entsprechen. Nachstehend wird für ein Ausführungsbeispiel die Berechnung einer vorläufigen Ausweichtrajektorie erläutert, deren Wegverlauf einem Polynom 5. Grades entspricht. Die nachstehende Gleichung (1) beschreibt ein entsprechendes Polynom.

$$(1) \qquad y = f(x) = a_5x^5 + a_4x^4 + a_3x^3 + a_2x^2 + a_1x + a_0$$

Dabei entsprechen die jeweiligen y-Werte des Polynoms dem Querversatz des Fahrzeugs. Die Koeffizienten $a_5$ - $a_0$ des Polynoms können anhand der nachstehenden Randbedingungen (2) - (7) und durch das Aufstellen und Lösen eines Gleichungssystems ermittelt werden.

$$(2) \qquad f(x_0) = y_0$$

Da die Position des Fahrzeugs zu Beginn des Ausweichvorgangs der aktuellen Position des eigenen Fahrzeugs im Umgebungsmodell entspricht, sind die Werte der Parameter $x_0$ und $y_0$ bekannt. Wenn der Schwerpunkt des eigenen Fahrzeugs im Ursprung liegt, sind die Werte der Parameter $x_0$ und $y_0$ jeweils Null.

$$(3) \qquad f'(x_0) = m_{01}$$

$$(4) \qquad f''(x_0) = m_{02}$$

Die erste Ableitung f(x) und die zweiten Ableitung f'(x) des Polynoms f(x) nach dem Weg in x-Richtung am Anfangspunkt A, also für die Koordinate $x_0$, entsprechen den Parametern $m_{01}$ und $m_{02}$. Die Werte der Parameter $m_{01}$ und $m_{02}$ können aus dem Umgebungsmodell ermittelt werden. Zum Beispiel kann das ESA-Steuergerät 12 in dem Umgebungsmodell Positionsänderungen des eigenen Fahrzeugs anhand der Relativ-Position von Fahrbahnbegrenzungen 106 und/oder Leitpfosten in dem Umgebungsmodell ermitteln. Die Werte für die Parameter $m_{01}$ und $m_{02}$ können aber auch aus den Sensorsignalen des Beschleunigungssensors 24 ermittelt werden. Bei einem geraden Streckenverlauf haben die Parameter $m_{01}$ und $m_{02}$ in der Regel den Wert Null.

$$(5) \qquad f(x_e) = y_{max}$$

$$(6) \qquad f'(x_e) = m_{e1}$$

$$(7) \qquad f''(x_e) = m_{e2}$$

Der Parameter $y_{max}$ entspricht dem beabsichtigten bzw. gewünschten Versatz im Endpunkt B. Die Parameter $m_{e1}$ und $m_{e2}$ entsprechen der ersten und zweiten Ableitung der Trajektorie im Endpunkt B. Der Wert des Parameters $y_{max}$ kann, wie bereits vorstehend erläutert wurde, so gewählt werden, dass sich zum Ende des Ausweichvorgangs der Schwerpunkt des eigenen Fahrzeugs EGO ungefähr in der Mitte des linken Fahrsteifens befindet. Ähnlich wie die Parameter $m_{01}$ und $m_{02}$ für den Anfangswert, können die Werte der Parameter $m_{e1}$ und $m_{e2}$ in Abhängigkeit des Verlaufs der Straße in dem Umgebungsmodell bestimmt werden. Für eine gerade Strecke haben die Parameter $m_{e1}$ und $m_{e2}$ in der Regel den Wert Null.

Für die Parameter $m_{01}$, $m_{02}$, $m_{e1}$ und $m_{e2}$ kann ein zulässiger Wertebereich definiert sein. Das Verfahren kann abgebrochen werden, wenn einer der für die Parameter $m_{01}$, $m_{02}$, $m_{e1}$ und $m_{e2}$ ermittelten Werte außerhalb des zulässigen Wertebereichs liegt. Dies kann zum Beispiel der Fall sein, wenn der vor dem eigenen Fahrzeug liegende Straßenverlauf eine sehr starke Krümmung aufweist. Wenn die Berechnung der Ausweichtrajektorie abgebrochen wird, kann der Fahrer mit einem Hinweis auf eine drohende Kollision hingewiesen werden und darauf, dass ein Ausweichvorgang nicht unterstützt wird. Zudem kann eine automatische Not-Bremsung ausgelöst werden.

Mit den bekannten Werten für den Anfangspunkt und den beabsichtigten Werten für den Endpunkt der vorläufigen Ausweichtrajektorie 102 kann mit dem Polynom f(x), der ersten Ableitung f(x) nach dem Weg und der zweiten Ableitung f'(x) nach dem Weg ein Gleichungssystem mit sechs Gleichungen aufgestellt werden, um die unbekannten Koeffizienten $a_5$ - $a_0$ des Polynoms zu berechnen.

Der Wegverlauf der Ausweichtrajektorie kann auch mit Polynomen 3. - 8. Grades ermittelt werden. Ausweichtrajektorien, deren Wegverlauf mindesten einem Polynom 4. Grades entspricht, sind an den Übergängen zwischen Normalfahrt und Ausweichvorgang, also am Anfangspunkt und am Endpunkt der Ausweichtrajektorie zweimal stetig differenzierbar. Die aus dem Stand der Technik bekannten Ausweichtrajektorien, deren Wegverlauf Sigmoidfunktionen entsprechen, sind zwar mehrfach stetig differenzierbar, allerdings entstehen Unstetigkeiten bei den Übergängen zwischen Normalfahrt und Ausweichvorgang. Somit ergeben sich aus der Sigmoidfunktion Sprünge im Wegverlauf der Trajektorie, die sich negativ auf die Regelung der Quergeschwindigkeit und/oder der Querbeschleunigung des Fahrzeugs auswirken.

Zur Ermittlung der Koeffizienten der Polynome 3. - 8. Grades können Gleichungssysteme aufgestellt werden, wobei sich die Anzahl der aufzustellenden Gleichungen allgemein aus der Anzahl der zu berechnenden Koeffizienten ergibt. In der nachstehenden Tabelle ist beispielhaft aufgeführt, welche aus dem Umgebungsmodell bekannten Parameter/Randbedingungen zum Lösen der jeweiligen Gleichungssysteme verwendet werden können. Für die Berechnung von geraden Polynomen, also Polynomen 4., 6. oder 8. Grades kann zusätzlich die in Gleichung (8) aufgestellte Randbedingung verwendet werden.

| | | | |
|---|---|---|---|
| $f(x_0) = y_0$ | $f(x_e) = y_{max}$ | | |
| $f'(x_0) = m_{01}$ | $f'(x_e) = y_{01}$ | | 3. + 4. Grad |
| $f''(x_0) = m_{02}$ | $f''(x_e) = y_{02}$ | | 5. + 6. Grad |
| $f'''(x_0) = m_{03}$ | $f'''(x_e) = y_{03}$ | | 7. + 8. Grad |

$$(8) \qquad f(x_e/2) = y_0 + y_{max}/2$$

Die Gleichung (8) beruht auf der Annahme, dass beim Zurücklegen des halben Wegs in x-Richtung, also in der Mitte der Ausweichtrajektorie, auch der halbe Weg in y-Richtung zurückgelegt werden soll.

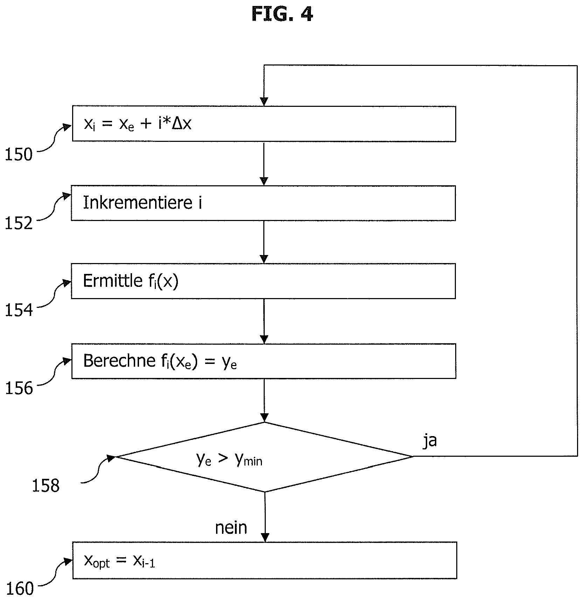

Zur Optimierung der vorläufigen Ausweichtrajektorie 102 kann die vorläufige Ausweichtrajektorie 102 gestreckt werden. Dies ist in den Fig. 3b und 4 dargestellt. Zum Strecken der vorläufigen Ausweichtrajektorie 102 wird der Endpunkt B schrittweise nach rechts verschoben, bis der Endpunkt C erreicht wird. Durch das Strecken der vorläufigen Ausweichtrajektorie 102 wird diese "flacher", also deren Krümmung geringer. Somit resultieren aus dem Wegverlauf der Trajektorie geringere Quergeschwindigkeiten und/oder Querbeschleunigungen, die auf das Fahrzeug wirken. Die Lage des Endpunkts C ist zu Beginn des Streckverfahrens nicht bekannt und kann anhand eines Passierpunkts D bestimmt werden. Die gestreckte Ausweichtrajektorie kann auch als optimierte Ausweichtrajektorie 104 bezeichnet werden. Der Punkt D wird so gewählt, dass das eigene Fahrzeug EGO ohne Kollision an dem Objekt OBS vorbeifahren kann. Also das eigene Fahrzeug EGO ungefähr auf Höhe des erwarteten Kollisionspunkts einen seitlichen Mindestabstand zum Objekt OBS aufweist. Der Passierpunkt D kann in Abhängigkeit einer relevanten Kante des Objekts OBS, einem Sicherheitsabstand und der halben Fahrzeugbreite des eigenen Fahrzeugs EGO ermittelt werden. Die relevante Kante des Objekts OBS kann die Kante des Objekts OBS sein, die der Ausweichtrajektorie am nächsten ist. Bei dem in Fig. 3b dargestellten Beispiel ist dies die hintere linke Kante 110 des Objekts OBS. Wenn das eigene Fahrzeug EGO rechts am Objekt OBS vorbeifahren würde, würde die hintere rechte Kante 112 des Objekts OBS als relevante Kante des Objekts OBS gewählt werden.

Bei dem in Fig. 3a dargestellten Ausführungsbeispiel wurde der Parameter $x_e$, also die x-Koordinate des Endpunkts B der vorläufigen Ausweichtrajektorie 102, bereits anhand einer hinteren Kante des Objekts OBS bestimmt. Entsprechend kann der Parameter $x_e$ auch als x-Koordinate für den Passierpunkt D verwendet werden. Die y-Koordinate des Passierpunkts D, also der Wert $y_e$, kann zum Beispiel mit den nachstehenden Schritten ermittelt werden. Die Fig. 4 ist eine schematische Darstellung eines Ablaufdiagramms zum iterativen Strecken der Ausweichtrajektorie. Dieses Verfahren kann zum Beispiel vom ESA-Steuergerät 12 ausgeführt werden. Zum iterativen Strecken der vorläufigen Ausweichtrajektorie 102 kann der Wert des Parameters $x_e$ schrittweise um einen Wert $\Delta x$ erhöht werden, bis eine optimierte Ausweichtrajektorie gefunden wird. Dies ist in Fig. 3b durch die mit $\Delta x$ bezeichneten Abschnitte angedeutet.

In Block 150 wird der Wert $x_i$ berechnet. Der Wert $x_i$ ergibt sich aus der Addition der x-Koordinate $x_e$ des Endpunkts der vorläufigen Ausweichtrajektorie 102 mit der Schrittweite $\Delta x$. Die Schrittweite $\Delta x$ wird mit dem Inkrement i multipliziert, das in Block 152 jeweils um '1' erhöht wird. Somit erhöht sich der Wert $x_i$ mit jedem Durchlauf der Schleife um eine Schrittweite $\Delta x$.

In Block 154 wird das Gleichungssystem für den neuen Wert $x_i$ gelöst, um die entsprechenden Koeffizienten des Polynoms $f_i(x)$ zu erhalten. Die Werte der Parameter $y_{max}$, $m_{e1}$ und $m_{e2}$ können dabei jeweils an die Umgebung des Fahrzeugs auf Höhe der Koordinate $x_i$ angepasst werden.

In Block 156 wird der Wert $x_e$ in das neu berechnete Polynom $f_i(x)$ eingesetzt, um den Wert $y_e$ für den Passierpunkt D zu erhalten,. Da die Ausweichtrajektorie durch das Stecken mit jedem Durchlauf der Schleife "flacher" wird, wird der Passierpunkt D bei jedem Durchlauf der Schleife in Richtung der Kante 110 des Objekts OBS verschoben.

In Block 158 wird der neu berechnete Wert $y_e$ mit einem Abstands-Schwellenwert $y_{min}$ verglichen. Der Abstands-Schwellenwert $y_{min}$ kann so definiert sein, dass das eigene Fahrzeug EGO das Objekt OBS sicher passieren kann. Zum Beispiel kann der Abstands-Schwellenwert $y_{min}$ durch die Addition der y-Koordinate der hinteren linken Kante 110 des Objekts, eines Sicherheitsabstands und der halben Breite des eigenen Fahrzeugs bestimmt werden. Der Sicherheitsabstand kann zudem abhängig von der Geschwindigkeit des eigenen Fahrzeugs EGO und/oder des Objekts OBS sein. Ferner kann der Abstands-Schwellenwert $y_{min}$ zum Beispiel anhand der y-Koordinate der in Fig. 3b gestrichelt dargestellten Fahrbahnmarkierung 106 auf Höhe von $x_e$ berechnet oder bestimmt werden.

Wenn der für den Wert $x_e$ berechnete Wert $y_e$ größer als der Abstands-Schwellenwert $y_{min}$ ist, kann das eigene Fahrzeug EGO das Objekt OBS sicher passieren. Das Verfahren springt zum Block 150 und wird für einen um die Schrittweite $\Delta x$ erhöhten Wert $x_i$ erneut durchgeführt. Wenn der Parameter $y_e$ kleiner oder gleich zum Abstands-Schwellenwert $y_{min}$ ist, wird das Streckverfahren abgebrochen und der in der vorhergehenden Schleife berechnete Wert $x_{i-1}$ wird als Wert für $x_{opt}$, also der x-Koordinate des Endpunkts der optimierten Ausweichtrajektorie übernommen.

Anhand der ermittelten Ausweichweichtrajektorie kann für jeden Punkt entlang des Ausweichvorgangs der beabsichtigte Querversatz des Fahrzeugschwerpunkts berechnet werden. Der berechnete Querversatz des Fahrzeugschwerpunkts kann während des Ausweichvorgangs zur Unterstützung der Lenkbewegungen des Fahrers verwendet werden. Anhand der ersten und zweiten Ableitung der Ausweichtrajektorie nach dem Weg kann für jeden Punkt entlang des Ausweichvorgangs die jeweilige beabsichtigte Quergeschwindigkeit und beabsichtigte Querbeschleunigung berechnet werden. Auch diese Werte können zur Unterstützung des Fahrers während des Ausweichvorgangs verwendet werden.

Der beabsichtigte Querversatz, die beabsichtigte Quergeschwindigkeit und/oder die beabsichtigte Querbeschleunigung können zum Beispiel von einem Regler des ESA-Steuergeräts 12 als Soll-Größen verwendet werden. Aus dem Umgebungsmodell kann der Ist-Querversatz ermittelt werden. Zum Beispiel kann der Ist-Querversatz anhand von im Umgebungsmodell enthaltenen Fahrbahnbegrenzungen oder Fahrbahnmarkierungen 106 relativ zum eigenen Fahrzeug ermittelt werden. Ferner kann der Ist-Versatz auch anhand der Relativ-Position des Objekts im Umgebungsmodell ermittelt werden. Die Ist-Quergeschwindigkeit und die Ist-Querbeschleunigung können aus der Veränderung der Position des eigenen Fahrzeugs in dem Umgebungsmodell ermittelt werden.

Fig. 5 ist eine schematische Darstellung eines Regelungskonzepts für die Lenkunterstützung. Das in Fig. 5 dargestellte Regelungskonzept umfasst zwei Teile. Im ersten Teil wird ein Soll-Lenkradwinkel $\delta_{soll}$ ermittelt. Der Soll-Lenkradwinkel $\delta_{soll}$ führt das eigene Fahrzeug auf die ermittelten und durch eine Lenkbewegung des Fahrers ausgewählten Ausweichtrajektorie. Im zweiten Teil wird ein Soll-Wert für ein von dem Lenkunterstützungs-Aktuator 30 zu überlagerndes Drehmoment $M_{soll}$ ermittelt. Durch die Überlagerung des Drehmoments $M_{soll}$ in der elektromechanischen Servolenkung wird im ersten Teil sichergestellt, dass sich der vom Fahrer vorgegebene Ist-Lenkradwinkel $\delta_{ist}$ dem Soll-Lenkradwinkel $\delta_{soll}$ annähert. Das Drehmoment $M_{soll}$ und/oder die Veränderung des Lenkradwinkels ist dabei so gewählt, dass der Fahrer das überlagerte Drehmoment $M_{soll}$ übersteuern und den eingestellten Lenkradwinkel verändern kann.

Als Eingangsgrößen für den ersten Teil werden bei dem in Fig. 5 dargestellten Ausführungsbeispiel der Soll-Querversatz $y_{soll}$ und/oder die Soll-Querbeschleunigung $a_{y,soll}$ verwendet. Die Werte der Eingangsgrößen $y_{soll}$ und $a_{y,soll}$ können aus der berechneten Ausweichtrajektorie ermittelt werden. Zudem wird der aktuelle Querversatz $y_{ist}$ zum ersten

Teil geführt. Der aktuelle Querversatz $y_{ist}$ des eigenen Fahrzeugs kann aus dem Umgebungsmodell oder direkt anhand der Sensorsignale der zumindest einen Kamera 18 ermittelt werden. Ferner können der Ist-Lenkradwinkel $\delta_{ist}$, die Ist-Fahrzeuggeschwindigkeit $v_{ist}$, der Ist-Schwimmwinkel $\beta_{ist}$ des Fahrzeugs, die Ist-Gierrate $\dot{\Psi}_{ist}$ und der aktuelle Reibwert $\mu_0$ zum ersten Teil geführt werden. Der Ist-Lenkradwinkel $\delta_{ist}$ und die Ist-Fahrzeuggeschwindigkeit $v_{ist}$ können mit dem Lenkwinkelsensor 28, dem Beschleunigungssensor 24 und dem Geschwindigkeitssensor 22 ermittelt werden. Der Ist-Schwimmwinkel $\beta_{ist}$ kann durch eine Beobachterstruktur näherungsweise bestimmt oder zu Null gesetzt werden. Der Reibwert $\mu_0$ kann zum Beispiel zwischen den in Fig. 2 dargestellten Blöcken 52 und 58 ermittelt werden, also nachdem in Block 52 eine Kollisionsgefahr erkannt wurde und bevor in Block 58 der Ausweichwunsch des Fahrers erkannt wird. Der Reibwert $\mu_0$ kann auch zu Beginn des Ausweichmanövers, zum Beispiel während der ersten Bruchteile des Ausweichmanövers ermittelt werden. Falls es nicht möglich sein sollte, einen Reibwert $\mu_0$ zu ermitteln, kann ein vorher ermittelter oder ein voreingestellter Reibwert $\mu_0$ zugeführt werden. Ferner ist es auch möglich, dass auf die Zuführung des Reibwerts $\mu_0$ verzichtet wird, also kein Reibwert $\mu_0$ zugeführt wird.

Der erste Teil kann eine Vorsteuerung, einen ersten Regler A und einen zweiten Regler B umfassen. Fig. 6 ist eine schematische Darstellung des ersten Teils. Die Auslegung des ersten Teils beruht auf der Annahme, dass die Querkraft am vorderen Rad des Fahrzeugs durch den Lenkwinkel $\delta$ beeinflusst werden kann. Zum Beispiel wird davon ausgegangen, dass die Querkraft am vorderen Rad $F_v$ von dem Reifenschräglaufwinkel $\alpha_v$ am vorderen Rad und von der Reibwertpaarung Reifen-Fahrbahn (Reifenkennlinie) des vorderen Rads abhängt. Ausgehend von den Annahmen und Zusammenhängen des Einspurmodells wird davon ausgegangen, dass der Reifenschräglaufwinkel $\alpha_v$ am vorderen Rad vom Schwimmwinkel $\beta$, der Gierrate $\dot{\Psi}$ und der Fahrzeuggeschwindigkeit $v$ abhängt, wobei der Reifenschräglaufwinkel $\alpha_v$ am vorderen Rad zudem durch den Rad-Lenkwinkel $\delta_r$ verändert werden kann. Die Vorsteuerung, der erste Regler A und der zweite Regler B sind daher so ausgelegt, dass sie als Stellgröße einen Anteil einer am vorderen Rad einzustellenden Kraft $F_v$ ausgeben.

Die Vorsteuerung kann für eine schnelle Regelung vorgesehen sein. Als Eingangsgröße für die Vorsteuerung kann die Soll-Querbeschleunigung $a_{y,soll}$ verwendet werden. Die Stellgröße $F_{v,St}$ der Vorsteuerung kann als Anteil der Kraft aufgefasst werden, der erforderlich ist, um die geforderte Soll-Querbeschleunigung $a_{y,soll}$ einzustellen. Aus der bekannten Masse des Fahrzeugs und der in Abhängigkeit der Reifenkennlinie für das hintere Rad berechenbaren Querkraft am hinteren Rad kann die über den Lenkwinkel am vorderen Rad einzustellende Kraft $F_{v,St}$ ermittelt werden. Dies wird durch die Gleichung (9) verdeutlicht.

$$(9) \qquad F_{v,St} = \frac{ma_{y,soll} - f_h\left( \tan^{-1}\left( \frac{l_h\dot{\Psi}_{ist} - v_{ist}\sin(\beta_{ist})}{v_{ist}\cos(\beta_{ist})} \right) \right)}{\cos(\delta_r)}$$

Der Term $f_h$ beschreibt die Reibwertpaarung Reifen-Fahrbahn (Reifenkennlinie) für das hintere Rad. Die Reifenkennlinien für das hintere Rad sowie das vordere Rad können durch mindestens zwei Polygonzüge approximiert werden. Zum Lösen der Gleichung (9) sind zudem der Rad-Lenkwinkel $\delta_r$, die Fahrzeuggeschwindigkeit $v$, der Schwimmwinkel $\beta$ und die Gierrate $\dot{\Psi}$ erforderlich. Entsprechend werden der Vorsteuerung die Ist-Werte des Rad-Lenkwinkels $\delta_r$, der Fahrzeuggeschwindigkeit $v$, des Schwimmwinkels $\beta$ und der Gierrate $\dot{\Psi}$ zugeführt. Aufgrund der Zuführung der Ist-Werte zur Vorsteuerung, besitzt diese keine reine Steuerungsstruktur. Vielmehr ist die Vorsteuerung aufgrund der Berücksichtigung des Rad-Lenkwinkels $\delta_r$, der Fahrzeuggeschwindigkeit $v$, des Schwimmwinkels $\beta$ und der Gierrate $\dot{\Psi}$ nichtlinear. Die Vorsteuerung basiert auf einem invertierten Einspurmodell, welches das dynamische Fahrzeugverhalten beschreibt.

Der erste Regler A kann ein PD-Regler sein. Zudem kann der erste Regler A als adaptiver PD-Regler ausgeführt sein. Die Regelparameter des adaptiven PD-Reglers A können in einem Kennfeld abgelegt werden. Die Regelparameter können in Abhängigkeit der Ist-Fahrzeuggeschwindigkeit $v_{ist}$ und/oder des Reibwerts $\mu_0$ aus dem Kennfeld ausgelesen werden. Da sich die Ist-Fahrzeuggeschwindigkeit $v_{ist}$ und der Reibwert $\mu_0$ ändern können, können für unterschiedliche Ausweichvorgänge und auch während eines Ausweichvorgangs unterschiedliche Regelparameter ausgelesen werden. Somit ist der adaptive erste PD-Regler A nichtlinear. Als Eingangsgröße für den ersten Regler A kann die Abweichung $e_y$ des Ist-Querversatzes $y_{ist}$ vom Soll-Querversatz $y_{soll}$ verwendet werden. Die Stellgröße $F_{v,R,A}$ des ersten Reglers A kann ein Anteil der gewünschten Kraft am vorderen Rad sein, der eine Abweichung vom Soll-Querversatz ausgleicht.

Der zweite Regler B kann ein PD-Regler sein. Der zweite Regler B kann dazu vorgesehen sein, ein übersteuerndes oder untersteuerndes Fahrzeugverhalten auszugleichen. Wenn ein übersteuerndes oder untersteuerndes Fahrzeugverhalten erkannt wird, kann die Stellgröße $F_{v,R,B}$ des zweiten Reglers B bewirken, dass der Soll-Lenkradwinkel $\delta_{soll}$ reduziert wird oder, sollte dies erforderlich sein, sogar bewirken, dass ein entgegengesetzter Lenkwinkel $\delta_{soll}$ eingestellt wird. Der zweite PD-Regler B kann optional sein. Als Eingangsgröße für den zweiten Regler B kann zum Beispiel die Abweichung $e_{\dot{\psi}}$ der Ist-Gierrate $\dot{\Psi}_{ist}$ von einer Soll-Gierrate $\dot{\Psi}_{soll}$ vorgesehen sein.

Der Vorsteuerung wird die Soll-Querbeschleunigung $a_{y,soll}$ als Eingangsgröße zugeführt, so dass die Vorsteuerung schnell einen der Soll-Querbeschleunigung $a_{y,soll}$ entsprechenden Stellwert ausgeben kann. Da dem ersten Regler A die Abweichung des Querversatzes $e_y$ als Eingangsgröße zugeführt wird, kann der erste Regler A die Ungenauigkeiten der Vorsteuerung ausgleichen. Zum Beispiel kann der Stellwert des ersten Reglers A fast vernachlässigt werden, wenn die Vorsteuerung den Schwerpunkt des eigenen Fahrzeugs EGO exakt entlang der Ausweichtrajektorie führt. Somit erhöht der erste Regler A die Genauigkeit der Regelung. Der zweite Regler B kann beispielsweise insbesondere dann eingreifen, wenn das Fahrzeug übersteuert oder untersteuert, während die Stellgröße des zweiten Reglers B bei stabilen Fahrzeugverhalten fast vernachlässig werden kann.

Die von der Vorsteuerung, dem ersten Regler A und dem zweiten Regler B ausgegebenen Stellgrößen $F_{v,St}$, $F_{v,R,A}$ und $F_{v,R,B}$ können jeweils gewichtet werden. Die Gewichtung der Anteile kann von dem fahrdynamischen Zustand des Fahrzeugs abhängen. Zum Beispiel kann, wenn ein starkes Über- oder Untersteuern des Fahrzeugs erkannt wird, die Gewichtung des zweiten Reglers B erhöht werden. Bei dem in Fig. 6 dargestellten Ausführungsbeispiel werden die gewichteten Stellgrößen $F_{v,St}$, $F_{v,R,A}$ und $F_{v,R,B}$ addiert. Die addierten gewichteten Stellgrößen $F_{v,St}$, $F_{v,R,A}$ und $F_{v,R,B}$ ergeben den Soll-Wert einer am vorderen Rad einzustellenden Kraft $F_{v,soll}$. Wie bereits erläutert wurde, wird davon ausgegangen, dass die Querkraft am vorderen Rad von dem Reifenschräglaufwinkel $\alpha_v$ abhängt, wobei der Reifenschräglaufwinkel $\alpha_v$ am vorderen Rad durch den Rad-Lenkwinkel $\delta_r$ verändert werden kann. Diese Annahme ist in der Gleichung (10) dargestellt.

$$(10) \qquad \alpha_v = \delta_r - \tan^{-1}\left(\frac{l_v \dot{\Psi} + v\sin(\beta)}{v\cos(\beta)}\right)$$

Anhand der Gleichung (10) und dem aus der Reifenkennlinie $f_v$ für das vordere Rad bekannten Zusammenhang zwischen der Querkraft und dem Reifenschräglaufwinkel $\alpha_v$ am vorderen Rad kann die Gleichung (10) zur Gleichung (11) umgestellt werden.

$$(11) \qquad \delta_{r,soll} = f_v^{-1}\left(F_{v,soll}\right) + \tan^{-1}\left(\frac{l_v \dot{\Psi}_{ist} + v_{ist}\sin(\beta_{ist})}{v_{ist}\cos(\beta_{ist})}\right)$$

Gemäß dem in Gleichung (11) beschriebenen Zusammenhang wird bei dem in Fig. 6 dargestellten Regler der ermittelte Soll-Wert $F_{v,soll}$ als Funktion der Reifenkennlinie $f_v$ für die Reibwertpaarung Reifen-Fahrbahn für das vordere Rad berücksichtigt. Zudem wird der Term für den Reifenschräglaufwinkel $\alpha$ addiert. Der derart ermittelte Soll-Rad-Lenkwinkel $\delta_{r,soll}$ kann mit einem Lenkübersetzungsverhältnis $i_s$ multipliziert werden, um den Soll-Lenkradwinkel $\delta_{soll}$ zu erhalten. Durch die Verwendung der Reifenkennlinie und/oder der teilinvertierten Reifenkennlinie kann vermieden werden, dass der erste Teil der Regelung die Lenkung unnötig stark zuzieht und das Fahrzeug übermäßig untersteuert.

Der durch den ersten Teil des Reglers ermittelte Soll-Lenkradwinkel $\delta_{soll}$ wird dem zweiten Teil zugeführt. Zudem kann dem zweiten Teil des Reglers der aktuelle Ist-Lenkradwinkel $\delta_{ist}$ und/oder die zeitliche Veränderung des Ist-Lenkradwinkels, also die Ist-Lenkradwinkelgeschwindigkeit $\dot{\delta}_{ist}$, zugeführt werden. Die aktuellen Werte für den Ist-Lenkradwinkel $\delta_{ist}$ und die Ist-Lenkradwinkelgeschwindigkeit $\dot{\delta}_{ist}$, können anhand der Sensorsignale oder der Veränderung der Sensorsignale des Lenkwinkelsensors 28 ermittelt werden.

Der zweite Teil des in Fig. 5 dargestellten Regelungskonzepts kann einen Kaskadenregler umfassen. Als erster Regler des Kaskadenreglers kann ein dritter Regler C vorgesehen sein. Der dritte Regler C kann ein PI-Regler sein. Die Eingangsgröße des dritten Reglers C kann die Abweichung $e_\delta$ des Soll-Lenkradwinkels $\delta_{soll}$ von dem Ist-Lenkradwinkel $\delta_{ist}$ sein.

Als zweiter Regler des Kaskadenreglers kann ein vierter Regler D vorgesehen sein. Der vierte Regler D kann ein P-Regler sein. Die Eingangsgröße des vierten Reglers D kann die Abweichung $e_\delta$ der Ist-Lenkradwinkelgeschwindigkeit $\dot{\delta}_{ist}$ von der Soll-Lenkradwinkelgeschwindigkeit $\dot{\delta}_{soll}$ sein. Die Stellgröße des vierten Reglers D kann das Soll-Moment $M_{soll}$ sein.

Um dem Fahrer den in der jeweiligen Situation optimalen Lenkwinkel zu vermitteln, kann ein spezieller Lenkunterstützungs-Aktuator 30 vorgesehen sein. Der Lenkunterstützungs-Aktuator 30 kann dem vom Fahrer aufgebrachten Lenkwinkel/Lenkmoment ein dem Soll-Moment $M_{soll}$ entsprechendes Drehmoment überlagern. Der Fahrer kann dies als Ziehen des Lenkrads in Richtung des Soll-Lenkradwinkel $\delta_{soll}$ wahrnehmen. Durch die Rückführung des Ist-Lenkradwinkels $\delta_{ist}$ kann der Lenkunterstützungs-Aktuator 30 das Überlagerungsmoment solange aufbringen, bis der Fahrer den Soll-Lenkwinkel $\delta_{soll}$ eingestellt hat oder nicht mehr gegensteuert. Die Drehmomentüberlagerung kann vor und/oder nach der Drehmomentverstärkung durch die elektromechanische Servolenkung erfolgen. Die Überlagerung erfolgt rechentechnisch, zum Beispiel in dem EPS-Steuergerät 26. Der Fahrer wird somit durch ein haptisches Signal auf die optimale Ausweichtrajektorie gelenkt. Das überlagerte Drehmoment und die überlagerte Drehmomentänderung sind so bemessen, dass es jederzeit von dem Fahrer übersteuert werden kann.

Die Soll-Werte zum Führen des Fahrzeugs entlang der Ausweichtrajektorie können auch anhand von anderen Kriterien berechnet werden. Beispielsweise kann die Querbeschleunigung $a_y$ mit der nachstehenden Gleichung (12) anhand der Längsgeschwindigkeit v des eigenen Fahrzeugs EGO und der Krümmung k der Ausweichtrajektorie berechnet werden. Die Krümmung k wiederum kann mit der Gleichung (13) aus der ersten und zweiten Ableitung der Ausweichtrajektorie nach dem Weg berechnet werden.

$$(12) \qquad a_y = v^2 k$$

$$(13) \qquad k = f''(x)/(1+f'(x)^2)^{3/2}$$

Ein Kurswinkel $\lambda$ kann mit der Gleichung (14) anhand der ersten Ableitung der Ausweichtrajektorie nach dem Weg berechnet werden. Aus dem Kurswinkel $\lambda$ kann durch Ableiten nach der Zeit die Kursrate $\dot{\lambda}$ berechnet werden (Gleichung (15)), wobei die berechnete Kursrate $\dot{\lambda}$ als Soll-Gierrate verwendet werden kann.

$$(14) \qquad \lambda = \tan^{-1}(f'(x))$$

$$(15) \qquad \dot{\lambda} = d\lambda/dt = d\lambda/dx * dx/dt = (\tan^{-1}(f'(x)))' * v*\cos(\tan^{-1}(f'(x)))$$

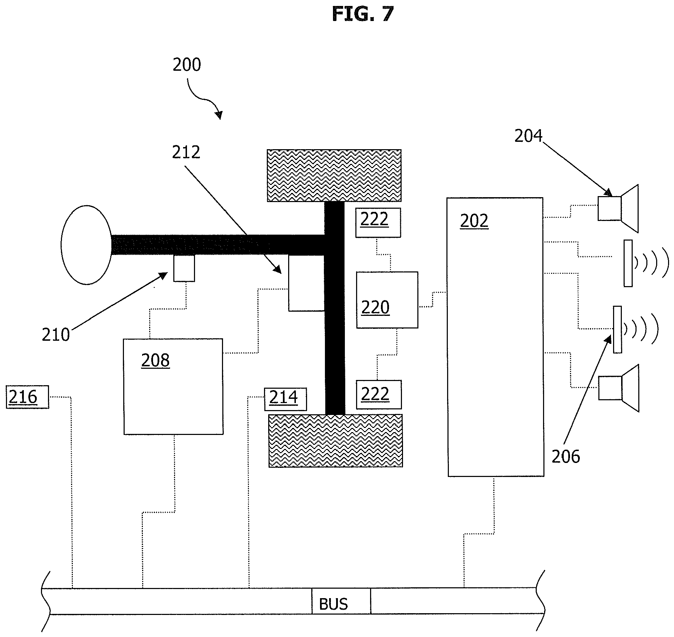

Fig. 7 ist eine schematische Darstellung einer alternativen Implementierung eines ESA-Systems 200. Der Unterschied zwischen dem ESA-System 10 und ESA-System 200 besteht darin, dass kein separates ESA-Steuergerät 12 vorgesehen ist. Vielmehr ist die Funktionalität des ESA-Steuergeräts 12 einem oder mehreren Steuergeräten zugeordnet. Zum Beispiel können die entsprechenden Funktionen einem ACC-Steuergerät (ACC := Adaptive Cruise Control), einem FCW-Steuergerät (FCW := Forward Collision Warning) oder einem AEB-Steuergerät (AEB := Automatic Emergency Braking) zugeordnet werden. Beispielhaft ist in Fig. 7 ein AEB-Steuergerät 202 dargestellt, das mit zumindest einer Kamera 204 und/oder zumindest einem Radarsensor 206 verbunden ist. Das AEB-Steuergerät 202 ist zudem mit einem EPS-Steuergerät 208 verbunden, das wiederum mit einem Lenkwinkelsensor 210 und einem Lenkunterstützungs-Aktuator 212 verbunden ist. Über einen Bus ist das AEB-Steuergerät 202 zumindest mit einem Geschwindigkeitssensor 214 und einem Beschleunigungssensor 216 verbunden. Ferner ist das AEB-Steuergerät 202 mit einem Bremssteuergerät 220 verbunden. Das Bremssteuergerät 220 ist mit den Radbremsen 222 verbunden.

Bei dem in Fig. 7 dargestellten Ausführungsbeispiel erzeugt das AEB-Steuergerät 202 ein Umgebungsmodell. Zudem kann das AEB-Steuergerät 202 Kollisionsgefahr erkennen, Ausweichtrajektorien berechnen und ein Warnsignal ausgeben. Die Parameter der berechneten Ausweichtrajektorien können dann an das EPS-Steuergerät 208 ausgeben werden.

Das EPS-Steuergerät 208 kann den Ausweichwunsch des Fahrers erkennen und anhand der empfangenen Parameter der Ausweichtrajektorien den Ausweichvorgang unterstützen. Die restlichen Funktionen eines ESA-Steuergeräts können in Abhängigkeit von der jeweiligen Implementierung auf dem AEB-Steuergerät 202 und dem EPS-Steuergerät 208 verteilt werden.

Das von dem AEB-Steuergerät 202 erzeugte Umgebungsmodell kann auch für und von anderen Fahrerassistenzfunktionen verwendet werden. Zum Beispiel können ein adaptives Geschwindigkeitskontrollsystem eine automatische Not-Bremsfunktion und die Notfall-Lenkunterstützung auf ein gemeinsames Umgebungsmodell zurückgreifen. Das AEB-Steuergerät 202 kann dabei entscheiden, ob in der jeweiligen Verkehrssituation ein Not-Ausweichen oder ein Not-Bremsen sicherer ist. Wenn das AEB-Steuergerät 202 entscheidet, dass ein Not-Ausweichvorgang durchgeführt werden kann, gibt das AEB-Steuergerät 202 entsprechende Steuerbefehle an das EPS-Steuergerät 208 aus. Falls aufgrund der Verkehrssituation ein Ausweichen nicht möglich sein sollte, gibt das AEB-Steuergerät 202 entsprechende Steuerbefehle an das Bremssteuergerät 220 aus.

Die vorangehend beschriebenen Varianten des Steuergeräts, des Systems und des Verfahrens dienen lediglich dem besseren Verständnis der Struktur, der Funktionsweise und der Eigenschaften des Steuergeräts, des Systems und des Verfahrens; sie schränken die Offenbarung nicht etwa auf die Ausführungsbeispiele ein. Die Figuren sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen.

**EP 3 003 810 B1**

**Patentansprüche**

1. Steuergerät (12, 202) für ein Landfahrzeug, wobei das Steuergerät (12, 202) dazu eingerichtet ist, anhand einer von dem Steuergerät (12, 202) berechneten Ausweichtrajektorie zumindest einen Aktuator (30, 212) des Landfahrzeugs anzusteuern, um einen Fahrer des Landfahrzeugs bei einem Ausweichvorgang zu unterstützen, wobei das Steuergerät (12, 202) ferner dazu eingerichtet ist,

   - Sensorsignale zumindest eines Sensors (18, 20, 22, 24, 204, 206, 214, 216) zu empfangen;
   - aus den empfangenen Sensorsignalen ein Umgebungsmodell zu erzeugen;
   - in dem erzeugten Umgebungsmodell die Position eines Objekts (OBS) relativ zu einer aktuellen Position des eigenen Fahrzeugs (EGO) zu ermitteln; und
   - eine vorläufige Ausweichtrajektorie (102) zu berechnen, wobei

      - die aktuelle Position des eigenen Fahrzeugs (EGO) in dem erzeugten Umgebungsmodell den Anfangspunkt (A) der vorläufigen Ausweichtrajektorie (102) bildet,
      - anhand der ermittelten Position des Objekts (OBS) ein vorläufiger Endpunkt (B) der vorläufigen Ausweichtrajektorie (102) ermittelt wird, und wobei
      - zum Ermitteln der Parameter der vorläufigen Ausweichtrajektorie (102) zumindest die Koordinaten des Anfangspunkts (A) und des vorläufigen Endpunkts (B) verwendet werden,

   wobei das Steuergerät (12, 202) ferner dazu eingerichtet ist, die vorläufige Ausweichtrajektorie (102) durch ein Verändern der Koordinaten des vorläufigen Endpunkts (B) zu strecken, um eine optimierte Ausweichtrajektorie (104) mit geringerer Krümmung als die vorläufige Ausweichtrajektorie (102) zu ermitteln.

2. Steuergerät (12, 202) nach Anspruch 1, wobei das Strecken der vorläufigen Ausweichtrajektorie (102) umfasst:

   - Verschieben der x-Koordinate ($x_e$) des vorläufigen Endpunkts (B) in Längsrichtung der Landfahrzeugs;
   - Ermitteln einer gestreckten Ausweichtrajektorie;
   - Ermitteln ob die gestreckte Ausweichtrajektorie einen Sicherheitsabstand ($y_{min}$) zu dem Objekt (OBS) einhält;
   - Fortsetzen des Streckens durch das erneute Ausführen der Schritte für die gestreckte Ausweichtrajektorie, wenn der Sicherheitsabstand ($y_{min}$) für die gestreckte Ausweichtrajektorie eingehalten wird;
   - Abbrechen des Streckens der vorläufigen Ausweichtrajektorie (102), wenn der Sicherheitsabstand ($y_{min}$) nicht eingehalten wird, wobei die letzte gestreckte Ausweichtrajektorie, bei der der Sicherheitsabstand ($y_{min}$) zum Objekt (OBS) eingehalten wird, als optimierte Ausweichtrajektorie (104) gewählt wird.

3. Steuergerät (12, 202) nach einem der vorhergehenden Ansprüche, wobei das Steuergerät (12, 202) dazu eingerichtet ist, den vorläufigen Endpunkt (B) seitlich neben einer hinteren Kante des Objekts (OBS) anzuordnen.

4. Steuergerät (12, 202) nach einem der vorhergehenden Ansprüche, wobei das Steuergerät (12, 202) dazu eingerichtet ist, die x-Koordinate ($x_e$) des vorläufigen Endpunkts (B) in Längsrichtung der Landfahrzeugs anhand der x-Koordinate einer das Objekt (OBS) zu einem freien Verkehrsraum hin begrenzenden hinteren Kante (110, 112) zu bestimmen.

5. Steuergerät (12, 202) nach einem der vorhergehenden Ansprüche, wobei das Steuergerät (12, 202) dazu eingerichtet ist, die y-Koordinate ($y_{max}$) des vorläufigen Endpunkts (B) in Querrichtung der Landfahrzeugs anhand des im Umgebungsmodell enthaltenen Straßenverlaufs im Bereich des Objekts (OBS) zu bestimmen.

6. Steuergerät (12, 202) nach einem der vorhergehenden Ansprüche, wobei der Wegverlauf der Ausweichtrajektorie einem Polynom 5. oder 6. Grades entspricht.

7. Steuergerät (12, 202) nach einem der vorhergehenden Ansprüche, wobei das Steuergerät (12, 202) dazu eingerichtet ist, zum Ermitteln der Parameter der vorläufigen Ausweichtrajektorie Ableitungen eines Polynoms nach dem Weg zu verwenden.

8. Steuergerät (12, 202) nach einem der vorhergehenden Ansprüche, wobei das Steuergerät (12, 202) dazu eingerichtet ist, zum Ermitteln der Parameter der vorläufigen Ausweichtrajektorie das Umgebungsmodell und/oder die Sensorsignale zu verwenden.

9. Steuergerät (12, 202) nach einem der vorhergehenden Ansprüche, wobei das Steuergerät (12, 202) dazu eingerichtet ist, aus der Ausweichtrajektorie Soll-Werte für die Regelung des zumindest einen Aktuators (30, 212) zu ermitteln.

10. Steuergerät (12, 202) nach einem der vorhergehenden Ansprüche, wobei das Steuergerät (12, 202) dazu eingerichtet ist, eine neue Ausweichtrajektorie zu berechnen, wenn Ist-Werte für den Querversatz, die Quergeschwindigkeit, die Querbeschleunigung und/oder den Lenkradwinkel außerhalb eines Toleranzbereichs liegen.

11. Lenkunterstützungssystem (10, 200) für ein Landfahrzeug, mit

    - einem Steuergerät (12, 202) nach einem der Ansprüche 1 bis 10;
    - zumindest einer Kamera (18, 204) und/oder zumindest einem Radarsensor (20, 206); und
    - einem Lenkunterstützungs-Aktuator (30, 212);

wobei das Steuergerät (12, 202) dazu eingerichtet ist,

    - ein Umgebungsmodell anhand von der zumindest einen Kamera (18, 204) und/oder von dem zumindest einen Radarsensor (20, 206) empfangenen Sensorsignalen zu erzeugen; und
    - anhand einer von dem Steuergerät (12, 202) berechneten Ausweichtrajektorie den zumindest einen Lenkunterstützungs-Aktuator (30, 212) anzusteuern, um einen Fahrer des Landfahrzeugs bei einem Ausweichvorgang zu unterstützen.

12. Verfahren zur Berechnung einer Ausweichtrajektorie für eine Lenkunterstützungsfunktion eines Landfahrzeugs, mit

    - Empfangen von Sensorsignalen zumindest eines Sensors;
    - Erzeugen eines Umgebungsmodells aus den empfangenen Sensorsignalen;
    - Ermitteln der Position eines Objekts (OBS) relativ zur aktuellen Position des eigenen Fahrzeugs (EGO) in dem erzeugten Umgebungsmodell;
    - Berechnen einer vorläufigen Ausweichtrajektorie, wobei

        - die aktuelle Position des eigenen Fahrzeugs in dem erzeugten Umgebungsmodell den Anfangspunkt der vorläufigen Ausweichtrajektorie bildet,
        - aus der ermittelten Position des Objekts ein vorläufiger Endpunkt der vorläufigen Ausweichtrajektorie ermittelt wird,
        - zum Ermitteln der Parameter der vorläufigen Ausweichtrajektorie zumindest die Koordinaten des Anfangspunkts und des vorläufigen Endpunkts verwendet werden; und

    - Ermitteln einer optimierten Ausweichtrajektorie (104) mit geringerer Krümmung als die vorläufige Ausweichtrajektorie (102), indem die vorläufige Ausweichtrajektorie (102) durch ein Verändern der Koordinaten des vorläufigen Endpunkts (B) gestreckt wird.

## Claims

1. A control device (12, 202) for a land vehicle, wherein the control device (12, 202) is set up to control at least one actuator (30, 202) of the land vehicle on the basis of an avoidance trajectory calculated by the control device (12, 202) in order to support a driver of the land vehicle during an evasive maneuver, the control device (12, 202) also being set up

    - to receive sensor signals of at least one sensor (18, 20, 22, 24, 204, 206, 214, 216);
    - to generate an environmental model from the received sensor signals;
    - to determine the position of an object (OBS) relative to a current position of the driver's own vehicle (EGO) in the generated environmental model; and
    - to calculate a preliminary avoidance trajectory (102), wherein

        - the current position of the driver's own vehicle (EGO) in the environmental model constitutes the starting point (A) of the preliminary avoidance trajectory (102),
        - a preliminary end point (B) of the preliminary avoidance trajectory (102) being determined on the basis of the determined position of the object (OBS), and wherein
        - at least the coordinates of the starting point (A) and of the preliminary end point (B) are used to determine the parameters of the preliminary avoidance trajectory (102),

the control device also being set up to extend the preliminary avoidance trajectory (102) by changing the coordinates of the preliminary end point (B) in order to determine an optimized avoidance trajectory (104) with a lesser curvature than the preliminary avoidance trajectory (102).

2. The control device (12, 202) as set forth in claim 1, wherein the extending of the preliminary avoidance trajectory (102) comprises:

- shifting of the x-coordinates ($x_e$) of the preliminary end point (B) in the longitudinal direction of the vehicle;
- determining of at least one extended avoidance trajectory;
- determining whether the extended avoidance trajectory maintains a safety distance ($y_{min}$) to the object (OBS);
- continuing the extension by repeating the execution of the steps for the extended avoidance trajectory if the safety distance ($y_{min}$) is maintained for the extended avoidance trajectory;
- aborting of the extension of the preliminary avoidance trajectory (102) if the safety distance ($y_{min}$) is not maintained, in which case the last extended avoidance trajectory in which the safety distance ($y_{min}$) to the object (OBS) is maintained is selected as the optimized avoidance trajectory (104).

3. The control device (12, 202) as set forth in any one of the preceding claims, wherein the control device (12, 202) is set up to arrange the preliminary end point (B) laterally next to a rear edge of the object (OBS).

4. The control device (12, 202) as set forth in any one of the preceding claims, wherein the control device (12, 202) is set up to determine the x-coordinate ($x_e$) of the preliminary end point (B) in the longitudinal direction of the vehicle on the basis of the x-coordinate of an edge (110, 112) delimiting the object (OBS) toward an open traffic space.

5. The control device (12, 202) as set forth in any one of the preceding claims, wherein the control device (12, 202) is set up to determine the y-coordinate ($y_{max}$) of the preliminary end point (B) in the lateral direction of the vehicle on the basis of the road course in the area of the object (OBS) contained in the environmental model.

6. The control device (12, 202) as set forth in any one of the preceding claims, wherein the course of the avoidance trajectory corresponds to a fifth- or sixth-degree polynomial.

7. The control device (12, 202) as set forth in any one of the preceding claims, wherein the control device (12, 202) is set up to use derivations of a polynomial following the course to determine the parameters of the preliminary avoidance trajectory.

8. The control device (12, 202) as set forth in any one of the preceding claims, wherein the control device (12, 202) is set up to use the environmental model and/or the sensor signals to determine the parameters of the preliminary avoidance trajectory.

9. The control device (12, 202) as set forth in any one of the preceding claims, wherein the control device (12, 202) is set up to determine target values for controlling the at least one actuator (30, 212) from the avoidance trajectory.

10. The control device (12, 202) as set forth in any one of the preceding claims, wherein the control device (12, 202) is set up to calculate a new avoidance trajectory if actual values for the lateral offset, lateral speed, lateral acceleration and/or steering wheel angle lie outside of a tolerance range.

11. A steering support system (10, 200) for a land vehicle, comprising

- a control device (12, 202) as set forth in any one of claims 1 to 10;
- at least one camera (18, 204) and/or at least one radar sensor (20, 206); and
- a steering support actuator (30, 212);

the control device (12, 202) being set up

- to generate an environmental model on the basis of sensor signals received from the at least one camera (18, 204) and/or from the at least one radar sensor (20, 206); and
- to control the at least one steering support actuator (30, 212) calculated by the control device (12, 202) in order to support a driver of the land vehicle during an evasive maneuver.

12. A method for calculating an avoidance trajectory for a steering support function of a land vehicle, comprising

- receiving of sensor signals of at least one sensor;
- generating an environmental model from the received sensor signals;
- determining the position of an object (OBS) relative to the current position of the driver's own vehicle (EGO) in the generated environmental model;
- calculating a preliminary avoidance trajectory, wherein

- the current position of the driver's own vehicle in the environmental model constitutes the starting point of the preliminary avoidance trajectory;
- a preliminary end point of the preliminary avoidance trajectory is determined from the determined position of the object,
- at least the coordinates of the starting point and of the preliminary end point are used to determine the parameters of the preliminary avoidance trajectory; and

- determining of an optimized avoidance trajectory (104) with a lesser curvature than the preliminary avoidance trajectory (102) through extension of the preliminary avoidance trajectory (102) by changing the coordinates of the preliminary end point (B).

**Revendications**

1. Appareil de commande (12, 202) pour un véhicule terrestre, dans lequel l'appareil de commande (12, 202) est conçu pour commander au moins un actionneur (30, 212) du véhicule terrestre à partir d'une trajectoire d'évitement calculée par l'appareil de commande (12, 202) afin d'assister un conducteur du véhicule terrestre lors d'une manoeuvre d'évitement, lequel appareil de commande (12, 202) est en outre conçu pour

- recevoir les signaux d'au moins un capteur (18, 20, 22, 24, 204, 206, 214, 216) ;
- générer un modèle d'environnement à partir des signaux de capteur reçus ;
- déterminer, dans le modèle d'environnement généré, la position d'un objet (OBS) par rapport à une position actuelle du propre véhicule (EGO) ; et
- calculer une trajectoire d'évitement provisoire (102), dans lequel
- la position actuelle du propre véhicule (EGO) dans le modèle d'environnement généré forme le point de départ (A) de la trajectoire d'évitement provisoire (102),
- à partir de la position déterminée de l'objet (OBS), un point final provisoire (B) de la trajectoire d'évitement provisoire (102) est déterminé, et
- au moins les coordonnées du point de départ (A) et du point final provisoire (B) sont utilisées pour déterminer les paramètres de la trajectoire d'évitement provisoire (102),

lequel appareil de commande (12, 202) étant en outre conçu pour étirer la trajectoire d'évitement provisoire (102) par une modification des coordonnées du point final provisoire (B) afin de déterminer une trajectoire d'évitement optimisée (104) ayant une courbure plus faible que la trajectoire d'évitement provisoire (102).

2. Appareil de commande (12, 202) selon la revendication 1, dans lequel l'étirement de la trajectoire d'évitement provisoire (102) comprend :

- le déplacement de la coordonnée x ($x_e$) du point final provisoire (B) dans la direction longitudinale du véhicule terrestre ;
- la détermination d'une trajectoire d'évitement étirée ;
- la détermination si la trajectoire d'évitement étirée respecte une distance de sécurité ($y_{min}$) par rapport à l'objet (OBS) ;
- la poursuite de l'étirement par nouvelle exécution des étapes pour la trajectoire d'évitement étirée si la distance de sécurité ($y_{min}$) pour la trajectoire d'évitement étirée est respectée ;
- l'arrêt de l'étirement de la trajectoire d'évitement provisoire (102) si la distance de sécurité ($y_{min}$) n'est pas respectée, la dernière trajectoire d'évitement étirée avec laquelle la distance de sécurité ($y_{min}$) par rapport à l'objet (OBS) est respectée étant choisie comme trajectoire d'évitement optimisée (104).

**EP 3 003 810 B1**

3. Appareil de commande (12, 202) selon l'une des revendications précédentes, dans lequel l'appareil de commande (12, 202) est conçu pour disposer le point final provisoire (B) latéralement près d'un bord arrière de l'objet (OBS).

4. Appareil de commande (12, 202) selon l'une des revendications précédentes, dans lequel l'appareil de commande (12, 202) est conçu pour déterminer la coordonnée x ($x_e$) du point final provisoire (B) dans la direction longitudinale du véhicule terrestre à partir de la coordonnée x d'un bord arrière (110, 112) délimitant l'objet (OBS) dans la direction d'un espace de circulation libre.

5. Appareil de commande (12, 202) selon l'une des revendications précédentes, dans lequel l'appareil de commande (12, 202) est conçu pour déterminer la coordonnée y ($y_{max}$) du point final provisoire (B) dans la direction transversale du véhicule terrestre à partir du tracé de route contenu dans le modèle d'environnement dans la zone de l'objet (OBS).

6. Appareil de commande (12, 202) selon l'une des revendications précédentes, dans lequel le tracé de la trajectoire d'évitement correspond à un polynôme du 5ème ou du 6ème degré.

7. Appareil de commande (12, 202) selon l'une des revendications précédentes, dans lequel l'appareil de commande (12, 202) est conçu pour utiliser les dérivées d'un polynôme par rapport au chemin pour déterminer les paramètres de la trajectoire d'évitement provisoire.

8. Appareil de commande (12, 202) selon l'une des revendications précédentes, dans lequel l'appareil de commande (12, 202) est conçu pour utiliser le modèle d'environnement et/ou les signaux de capteur pour déterminer les paramètres de la trajectoire d'évitement provisoire.

9. Appareil de commande (12, 202) selon l'une des revendications précédentes, dans lequel l'appareil de commande (12, 202) est conçu pour déterminer des valeurs de consigne pour la régulation dudit au moins un actionneur (30, 212) à partir de la trajectoire d'évitement.

10. Appareil de commande (12, 202) selon l'une des revendications précédentes, dans lequel l'appareil de commande (12, 202) est conçu pour calculer une nouvelle trajectoire d'évitement lorsque des valeurs réelles pour le déport latéral, la vitesse latérale, l'accélération latérale et/ou l'angle de braquage se situent en dehors d'une plage de tolérance.

11. Système d'assistance de direction (10, 200) pour un véhicule terrestre, comprenant

- un appareil de commande (12, 202) selon l'une des revendications 1 à 10 ;
- au moins une caméra (18, 204) et/ou au moins un capteur radar (20, 206) ; et
- un actionneur d'assistance de direction (30, 212) ;

dans lequel l'appareil de commande (12, 202) est conçu pour

- générer un modèle d'environnement à partir des signaux de capteur reçus de ladite au moins une caméra (18, 204) et/ou dudit au moins un capteur radar (20, 206) ; et,
- à l'aide d'une trajectoire d'évitement calculée par l'appareil de commande (12, 202), commander ledit au moins un actionneur d'assistance de direction (30, 212) afin d'assister un conducteur du véhicule terrestre lors d'une manoeuvre d'évitement.

12. Procédé de calcul d'une trajectoire d'évitement pour une fonction d'assistance de direction d'un véhicule terrestre, consistant à

- recevoir les signaux de capteur d'au moins un capteur ;
- générer un modèle d'environnement à partir des signaux de capteur reçus ;
- déterminer la position d'un objet (OBS) par rapport à la position actuelle du propre véhicule (EGO) dans le modèle d'environnement généré ;
- calculer une trajectoire d'évitement provisoire, dans lequel

- la position actuelle du propre véhicule dans le modèle d'environnement généré forme le point de départ de la trajectoire d'évitement provisoire,
- à partir de la position déterminée de l'objet, un point final provisoire de la trajectoire d'évitement provisoire

18

est déterminé, et

- au moins les coordonnées du point de départ et du point final provisoire sont utilisées pour déterminer les paramètres de la trajectoire d'évitement provisoire ; et

- déterminer une trajectoire d'évitement optimisée (104) ayant une courbure plus faible que la trajectoire d'évitement provisoire (102) en étirant la trajectoire d'évitement provisoire (102) par une modification des coordonnées du point final provisoire (B).

**FIG. 1**

## FIG. 2

Flowchart:

Umgebungsmodell erzeugen/aktualisieren — 50

Kollisionsgefahr — 52 — nein / ja

Ausweichtrajektorien berechnen — 54

Warnung ausgeben — 56

Ausweichwunsch — 58 — nein / ja

Ausweichunterstützung — 60

Umgebungsmodell aktualisieren — 62

Ausweichvorgang beendet — 64 — ja / nein

## FIG. 3a

## FIG. 3b

# FIG. 4

## FIG. 5

$$\delta_{ist} \; ; v_{ist} \; ; \beta_{ist} \; ; \dot{\Psi}_{ist} \; ; \mu_0$$

$a_{y,soll}$ → | Teil 1 | $\delta_{soll}$ → | Teil 2 | $M_{soll}$ → | Fahrzeug |

$y_{soll}$

$\dot{\delta}_{ist}$

$y_{ist}$ $\delta_{ist}$

## FIG. 6

$$\delta_{ist} \; ; v_{ist} \; ; \beta_{ist} \; \dot{\Psi}_{ist}$$

$g_{St}$

$a_{y,soll}$ → Vorsteuerung $F_{v,St}$

$y_{soll}$ $e_y$ → Regler A $F_{v,R,A}$

$y_{ist}$

$V_{ist}, \mu_0$

$g_{R,A}$

$f_v^{-1}$ $\delta_{r.soll}$ $i_s$ $\delta_{soll}$

$$\tan^{-1}\left(\frac{l_v \dot{\Psi}_{ist} + v_{ist} \sin(\beta_{ist})}{v_{ist} \cos(\beta_{ist})}\right)$$

$\dot{\Psi}_{soll}$ $e_\Psi$ → Regler B $F_{v,R,B}$

$\dot{\Psi}_{ist}$

$g_{R,B}$

# FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004008894 A1
- DE 102008013988 A1
- EP 1926654 B1
- WO 2008031662 A1
- EP 2323890 B1
- DE 102007013303 A1
- WO 2012062451 A1

**In der Beschreibung aufgeführte Nicht-Patentliteratur**

- **LONG HAN et al.** Bezier curved based path planning for autonomous vehicle in urban environment. *IEEE, Intelligent Vehicle Symposium,* 21. Juni 2010, ISBN 978-1-4244-7866-8, 1036-1042
- **ANDREAS SIMON et al.** Vehicle Guidance for an Autonomous Vehicle. *IEEE, Intelligent Transportation Systems, Proceedings,* 05. Oktober 1999, ISBN 978-0-7803-4975-9, 429-434
- **VIVIEN DELSART et al.** Real-Time Trajectory Generation for Car-like Vehicles Navigating Dynamic Environments. *IEEE International Conference on Robotics and Automation,* 12. Mai 2009, ISBN 978-1-4244-2788-8, 3401-3406